(19) Europäisches Patentamt
European Patent Office
Office européen des brevets

(11) Publication number: **0 270 830 A1**

(12) **EUROPEAN PATENT APPLICATION**

(21) Application number: **87116102.2**

(22) Date of filing: **02.11.87**

(51) Int. Cl.4: **A01N 37/34**, A01N 37/38, A01N 37/44, A01N 47/02, A01N 43/40

(30) Priority: **06.11.86 US 928076**

(43) Date of publication of application: **15.06.88 Bulletin 88/24**

(84) Designated Contracting States: **AT BE CH DE ES FR GB GR IT LI LU NL SE**

(71) Applicant: **AMERICAN CYANAMID COMPANY**
**1937 West Main Street P.O. Box 60**
**Stamford Connecticut 06904-0060(US)**

(72) Inventor: **Szucs, Stephen S.**
**12 Spring Valley Lane**
**Trenton New Jersey(US)**
Inventor: **Walworth, Bryant Leonidas**
**R.R. No. 2 Box 209G Federal City Road**
**Pennington New Jersey(US)**

(74) Representative: **Wächtershäuser, Günter, Dr.**
**Tal 29**
**D-8000 München 2(DE)**

(54) **Method for regulating plant growth using polysubstituted butyric acids, esters and derivatives thereof.**

(57) Methods using the active threo stereoisomer alone or as a mixture with the other threo enantioner and/or erythro stereoisomers of compounds of the general formula

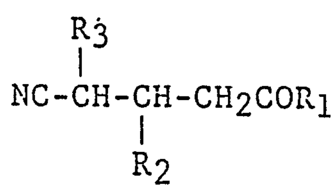

wherein $R_1$ is OH, $OR_4$ or OM;
$R_2$ and $R_3$ independently are each phenyl, substituted phenyl, pyridyl and halogensubstituted pyridyl;
$R_4$ is $C_1$-$C_8$ alkyl, $C_1$-$C_4$ monohaloalkyl, $C_3$-$C_4$ monohaloalkenyl, $C_4$-$C_6$ monohaloalkynyl, $C_4$-$C_6$ hydroxyalkynyl, $C_1$-$C_4$ alkoxy, $C_1$-$C_4$ alkyl, $C_3$-$C_4$ alkynyl, benzyloxy $C_2$-$C_3$ alkyl, benzyl or furfuryl;
M is an alkali metal, ammonium, $C_1$-$C_8$ mono-or dialkylammonium or hydroxyethylammonium;

are described for retarding growth and suppressing seedheads in turfgrasses and regulating the growth of plants.

EP 0 270 830 A1

# METHOD FOR REGULATING PLANT GROWTH USING POLYSUBSTITUTED BUTYRIC ACIDS, ESTERS AND DERIVATIVES THEREOF

Polysubstituted butyric acids, esters and derivatives of the general formula

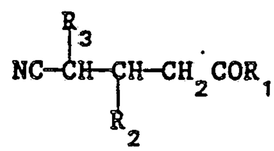

are described in United States Patents 4,224,052, 4,313,754 and 4,383,848.

The *threo* isomers of these compounds are disclosed as being nonselective vegetation control agents while the *erythro*/*threo* isomer mixtures are disclosed as postemergence herbicides having selectivity in certain crops such as corn, barley and wheat and as preemergence herbicides having selectivity in crops such as corn, cotton, soybeans, wheat and barley.

The cited references disclose polysubstituted butyric acids, esters and salts and the methods for using these compounds for killing unwanted plants either as selective herbicides, preferably as erythro/threo isomer mixtures, in the presence of desired plants or as nonselective herbicides, preferably as the threo isomers. However, the references do not disclose that any of these compounds would be useful to beneficially regulate the normal growth and development of any desirable plant species used for food, fiber or ornamental purposes. In addition, the references do not disclose that the growth of herbaceous perennial monocotyledonous species such as those used as turfgrasses could be regulated to reduce the overall costs for turf management. Furthermore, the references do not disclose or imply that either the active threo stereoisomer alone or as a mixture with the other erythro and threo stereoisomers may be used to retard the growth and inhibit seedhead formation in established turfgrass without producing significant phytotoxic effects which would detract from the appearance of the grass, particularly the color.

## SUMMARY OF THE INVENTION

This invention relates to a method for retarding the vegetative growth and suppressing seedhead formation in turfgrasses using the active <u>threo</u> stereoisomer alone or as a mixture with the other <u>threo</u> enantiomer and/or <u>erythro</u> stereoisomers of compounds of the general formula I

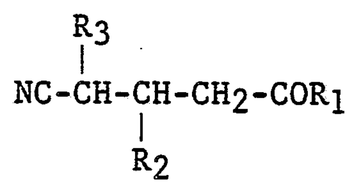

(I)

wherein $R_1$ is OH, $OR_4$, or OM;

$R_2$ and $R_3$ independently are each 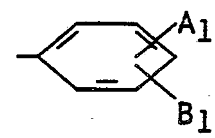,

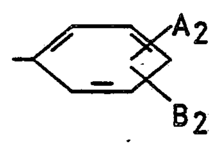, pyridyl and halogen-substituted pyridyl;

$R_4$ is $C_1$-$C_8$ alkyl, $C_1$-$C_4$ monohaloalkyl, $C_3$-$C_4$ monohaloalkenyl, $C_4$-$C_6$ monohaloalkynyl, $C_4$-$C_6$ hydroxyalkynyl, $C_1$-$C_4$ alkoxy, $C_1$-$C_4$ alkyl, $C_3$-$C_4$ alkynyl, benzyloxy $C_2$-$C_3$ alkyl, benzyl or furfury;

M is an alkali metal, ammonium, $C_1$-$C_8$ mono- or dialkylammonium or hydroxyethylammonium; and

$A_1$, $A_2$ and $B_1$, $B_2$ independently are hydrogen, fluorine, chlorine, bromine, iodine, $NO_2$, CN, $C_1$-$C_4$ alkyl, $C_1$-$C_4$ alkoxy, $OCF_2R_5$,

$CF_3$, $N(CH_3)_2$, $COOCH_3$, OH, $S(O)_xCH_3$ and $S(O)_xCF_2R_5$ wherein x is 0, 1 or 2 and $R_5$ is H, F, $CHF_2$, CHFCl or $CF_3$.

Examples of such turfgrass species include tall fescue, Kentucky bluegrass, perennial rye and Bermudagrass.

The polysubstituted butyric acids, esters and derivatives, particularly for the (-)-threo isomer, useful in the method of the present invention exhibit surprisingly improved margins of safety on turfgrasses over a range of application rates without causing phytotoxic symptoms on the foliage or detracting from the appearance of the turf. Application of these compounds to certain turfgrass species, such as tall fescue, has also resulted in an intensification of the green color in the appearance of the turfgrass.

Another embodiment of the invention relates to a method for regulating the growth of plants using the above compounds.

## DESCRIPTION OF THE PREFERRED EMBODIMENTS

The preferred substitution for the active threo stereoisomers alone or in mixtures with the other threo enantiomer and/or erythro stereoisomers for use in retarding growth and suppressing seedheads is as in formula II

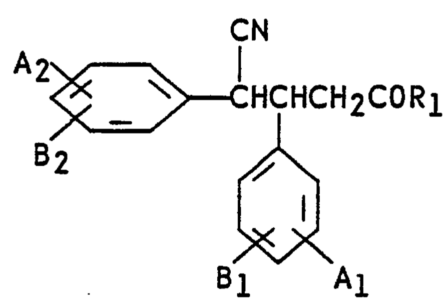

(II)

wherein $R_1$ is OH, $OR_4$ or OQ;

$A_1$, $B_1$, $A_2$ and $B_2$ at the ortho positions are independently hydrogen and fluorine;

$A_1$ and $B_1$ at the meta and para positions are independently hydrogen, fluorine, chlorine, bromine, iodine, $NO_2$, CN, $C_2$-$C_4$ alkyl, $C_1$-$C_4$ alkoxy, $OCF_2R_5$, $CF_3$, $N(CH_3)_2$, $COOCH_3$, OH, $S(O)_xCH_3$ and $S(O)_xCF_2R_5$ wherein x is 0, 1 or 2 and $R_5$ is H, F, CHFCl, $CHF_2$ or $CF_3$;

$A_2$ and $B_2$ at the meta and para positions are independently hydrogen, fluorine, chlorine and bromine;

$R_4$ is $C_1$-$C_4$ alkyl; and

Q is ammonium, $C_1$-$C_8$ mono- or dialkylammonium or hydroxyethylammonium.

The compounds useful in the method of the present invention may also be used in combination with other compounds known to retard the vegetative growth and suppress seedhead formation in turfgrasses. Two such classes of compounds known to have this type of activity are the imidazolinones and the sulfonylureas. Examples of specific combinations include the use of the esters, salts or the parent acids of 4-cyano-4-(m-fluorophenyl)-3-phenylbutyric acid or of 3-(p-chlorophenyl)-4-cyano-4-phenylbutyric acid with known turf regulators such as N-[2,4-dimethyl-5-[[(trifluoromethyl)sulfonyl]amino]phenyl]-2-chloro-N-[(4-methoxy-6-methyl-1,3,5-triazin-2-yl)aminocarbonyl]benzenesulfonamide, methyl 2-[[[[4,6-dimethyl-2-pyrimidinyl)amino]-carbonyl]amino]benzoate, 2-(4-isopropyl-4-methyl-5-oxo-2-imidazolin-2-yl)-3-quinolinecarboxylic acid, 5-ethyl-2-(4-isopropyl-4-methyl-5-oxo-2-imidazolin-2-yl)nicotinic acid, N-[(acetylamino)methyl]-2-chloro-N-(2,6-diethylphenyl)acetamide or maleic hydrazide.

Additionally it has been observed that the application of a plant growth regulating amount of compounds of formula I and preferably formula II, to the foliage, roots, stems, seeds, seed pieces, propagating organs or the soil in which the plants are grown results in beneficial plant growth regulating effects such as height reduction and reduced lodging in grains; increasing branching and/or reducing the height of fruit trees, woody ornamentals and household, garden and nursery plants; increasing yields in dicotyledonous crops such as cotton and soybeans; and inhibiting the growth of side shoots which is useful in crops such as tobacco, tomatoes and the like.

Research on the mode of action of plant growth regulators has shown that an active compound engages in the metabolism of a plant to produce one or more effects which can be used beneficially. Such effects include increasing the yield of fruit, seeds, fiber or other plant products, increasing the nutritional value of the foods derived from the plants, facilitating the harvest of the plant product, increasing the storage life of the plant product and retarding the vegetative plant growth of desirable plants. In each case the active compound is not simply a nutrient-supplying fertilizer but modifies the normal growth of a useful plant in a desired manner.

The application of the compounds of formula I s plant growth regulators depends on a variety : factors such as the desired plant species, its stage : growth and site of application, the conditions of ıe soil, weather and climate, the specific compound, :s formulation alone or in combination with other known .ant growth regulators and the method and rate of applica-:on. In general the rate of application is determined the dose necessary to produce the desired beneficial :fect.

Certain formula I compounds have produced ben-:icial effects on other herbaceous monocotyledonous ›ecies as well as herbaceous dicotyledonous species ıd woody perennial species. The application of certain ›mpounds on small grain crops, such as wheat, for example, ıs shortened the length of the stem. Such a reduction ı height, with or without further advantageous effects ıch as stem strengthening and thickening, internode ıortening and more erect stem and leaf orientation, can inimize or prevent lodging, which facilitates harvesting ıd allows a greater realization of yield.

Positive growth regulator effects have also een observed by the application of formula I compounds n the harvest of dicotyledonous crops. Yield increases re known to frequently arise through a mechanism which hannels the photosynthate to promote flower formation nd fruiting. The application of certain compounds in he method of the present invention has resulted in an ncrease in yield for dicotyledonous crops such as cotton nd soybeans.

Another advantageous effect produced by certain rowth regulators is branching. The development of side hoots can be promoted by breaking apical dominance. pplications of certain compounds by the method of the resent invention have promoted branching and have also

reduced the height of woody species such as apple. These features are very desirable in the cultivation of fruit trees and ornamentals. The regulation of the growth of perennial woody species can also be used to control hedges and to reduce the need for pruning. Growth regulation in trees, such as those growing under or in the vicinity of overhead electrical transmission lines, by soil, foliar or injectable application reduces the need by utility companies for tree triming in order to minimize electrical outages. On fruit trees growth regulation allows greater light penetration to enhance the color of fruit and reduce ripening time. Branching and dwarfing is also useful in miniaturizing ornamental, household, garden and nursery plants such as poinsettias, chrysanthemums, carnations, tulips and daffodils. It is also possible to inhibit the growth of side shoots, for example, in the cultivation of tobacco or in the planting of tomatoes.

A most preferred group of compounds of formula II which are useful in the plant growth regulating method of this invention are those wherein $A_1$, $B_1$, $A_2$ and $B_2$ are each H, F, Cl, Br.

The foregoing description should not be taken as implying that each of the compounds can exhibit all of the described effects on plants. The effect exhibited by a specific compound in any particular set of circumstances must be determined empirically. In actual practice, typical application rates of specific compounds used to produce the desired effect ranged from 0.1 to 500 g/ha on wheat, 1.0 to 2000 g/ha on soybeans, 15 to 4000 g/ha on turfgrasses, 20 to 2000 g/ha on cotton and 20 to 160 g/ha on apples.

The compounds of the invention may conveniently be applied as solid or granular compositions, comprising an effective growth regulating amount of a formula I polysubstituted butyric acid, ester or derivative, herein-

above defined, in admixture with an inert solid, water insoluble, diluent such as finely divided silica, kaolin, attapulgite, bentonite, montmorillonite, pumice, talc, fullers earth, diatomaceous earth, and the like, to the foliage and stems of the desired plant or to the soil or the medium containing the seeds, propagating organs or said plants.

The polysubstituted butyric acids, esters and derivatives of formula I may be prepared as granular formulations containing generally about 0.01% to 15% by weight of the plant growth regulator. The above compounds may also be formulated as wettable powders, emulsifiable concentrates, or flowable (thixotrophic) concentrates which are usually dispersed in water or other inexpensive liquid diluent for application as a liquid spray. Salts of formula I compounds which are water soluble may also be applied as aqueous solutions.

Wettable powder compositions can be prepared by grinding together about 15% to 80% by weight of a solid formula I compound, about 2% to 15% by weight of a surfactant such as sodium N-methyl-N-oleoyl taurate, alkyl phenoxy polyoxyethylene ethanol or sodium alkyl naphthalene sulfonate, and 18% to 65% by weight of a finely divided carrier such as kaolin, attapulgite, diatomaceous earth, or the like.

A typical formulation prepared in accordance with the above description can be defined as follows:

66% by weight of a formula I compound; 10% by weight of sodium salt of sulfated nonylphenoxypoly-(ethyleneoxy)ethanol, and 24% by weight of precipitated silica.

Advantageously, flowable (thixotropic) concentrates can be prepared by grinding together 40% to 60% by weight of a solid formula I plant growth regulator, 1% to 4% by weight of the sodium salt of condensed naphthalene sulfonic acids, 2% to 3% by weight of a gelling clay, 2% by weight of propylene glycol and from 54% to 32% by weight of water.

A typical granular formulation can be prepared by dissolving or dispersing the active compound in a solvent and applying the compound to a sorptive or nonsorptive carrier such as attapulgite, corn cob grits, limestone, silica, montmorillonite, bentonite or the like.

A typical emulsifiable concentrate can be prepared by admixing 13% by weight of the formula I compound with 6% by weight of a nonionic surfactant, such as a polyoxyethylene sorbitol ester, with 81% by weight of isophorone or 37% by weight of isophorone and 44% by weight of an aromatic petroleum distillate (bp 304-330$^{\circ}$F) Sp.G. 15/56$^{\circ}$C = 0.0853-0.875.

The method of using the compounds of the present invention in regulating the growth of desirable plants is illustrated in the following examples. While these examples are presented to show one skilled in the art how to operate within the scope of this invention, they do not serve as a limitation of the scope of the invention which scope is only defined in the claims.

## EXAMPLE 1

### Regulating the Growth of Turfgrasses

Seeds of the grass variety to be evaluated are tumbled for three minutes with soil at a rate of 7 ounces of seed per 100 lb of a loamy sand greenhouse mixed soil comprised of two parts sand, one part sassafras sandy loam and one part muck. Analysis of the soil mixture indicated a composition by weight of sand (86%), silt (6%) and clay (8%). A layer of this seed mixture one-half inch thick is placed in a four-inch diameter pot containing greenhouse soil. The plants are allowed to germinate and grow for six to eight weeks prior to treatment. The plants are clipped to a height of one-half inch and are sprayed with 100 mL of an aqueous solution containing 0.25% by volume of a nonionic surfactant mixture of alkylarylpolyoxyethyleneglycols, free fatty acids and 2-propanol, and the formula I compounds. The check plants are sprayed with solutions identical in every respect except that they do not contain formula I compounds. Each treatment is applied to three pots and the pot randomly placed in a greenhouse where the plants are cared for employing standard greenhouse procedures. Four to seven weeks after treatment, the heights of the plants are measured. The dry weight of clippings for each treatment is recorded after cutting the plants to a height of one-half inch and drying the clippings in an oven for 2 days at 90°C. Both the height and dry weight of the plants at each rate are expressed as a percent of the corresponding check measurements recorded in the same test.

The examination of Tables Ia through Id clearly demonstrates the effectiveness of formula I compounds in retarding the growth of tall fescue, Kentucky bluegrass, perennial ryegrass and Bermudagrass, respectively, as measured by plant height and/or dry clipping weight.

TABLE Ia

Regulating the Growth of Tall Fescue

(*Festuca arundinaceae*)

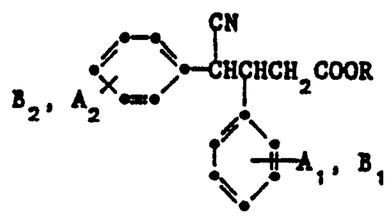

| $A_1$, $B_1$* | $A_2$, $B_2$* | R | e/t[a] | RATE (g/ha) | PERCENT OF CHECK HEIGHT | PERCENT OF CHECK PLANT DRY WEIGHT |
|---|---|---|---|---|---|---|
| 2-Cl | H | C2H5 | 55/45 | 100 | 100 | 94 |
| | | | | 200 | 78 | 85 |
| | | | | 300 | 78 | 65 |
| 2-F | 3-F | CH3 | 53/47 | 100 | 18 | 10 |
| | | | | 200 | 9 | 8 |
| | | | | 300 | 9 | 8 |
| 2,3-diCl | H | C2H5 | 50/50 | 100 | 100 | 80 |
| | | | | 200 | 86 | 45 |
| | | | | 300 | 43 | 27 |
| 2,4-diCl | 3-Cl | C2H5 | 50/50 | 100 | 78 | 79 |
| | | | | 200 | 63 | 72 |
| | | | | 300 | 67 | 70 |
| 2,4-diCl | 4-Cl | C2H5 | 50/50 | 25 | 78 | 82 |
| | | | | 50 | 80 | 87 |
| | | | | 75 | 80 | 91 |
| 2,4-diCl | 4-Cl | H | 55/45 | 100 | 89 | 86 |
| | | | | 200 | 89 | 103 |
| | | | | 300 | 100 | 107 |
| 2,4-diCl | H | C2H5 | 50/50 | 100 | 100 | 96 |
| | | | | 200 | 90 | 87 |
| | | | | 300 | 90 | 94 |
| 2,5-diCl | H | C2H5 | 58/42 | 100 | 80 | 80 |
| | | | | 200 | 60 | 69 |
| | | | | 300 | 70 | 66 |
| 2,6-diCl | H | C2H5 | 25/75 | 100 | 111 | 108 |
| | | | | 200 | 100 | 81 |
| | | | | 300 | 89 | 103 |
| 3-Br | 4-F | CH3 | 57/43 | 100 | 23 | 19 |
| | | | | 200 | 18 | 15 |
| | | | | 300 | 18 | 10 |
| 3-Br | H | C2H5 | 5/95 | 100 | 60 | 37 |
| | | | | 200 | 20 | 19 |
| | | | | 300 | 20 | 28 |

TABLE Ia (Continued)

| $A_1$, $B_1$* | $A_2$, $B_2$* | R | e/t | RATE (g/ha) | PERCENT OF CHECK HEIGHT | PERCENT OF CHECK PLANT DRY WEIGHT |
|---|---|---|---|---|---|---|
| 3-CF3 | 2-F | CH3 | 65/35 | 25 | 36 | 53 |
| | | | | 50 | 27 | 35 |
| | | | | 75 | 18 | 18 |
| 3-CF3 | 4-F | CH3 | 61/39 | 100 | 36 | 32 |
| | | | | 200 | 18 | 24 |
| | | | | 300 | 18 | 13 |
| 3-CF3 | H | C2H5 | 5/95 | 50 | 67 | 36 |
| | | | | 100 | 44 | 23 |
| | | | | 200 | 22 | 12 |
| 3-Cl | 2-Cl | C2H5 | 27/73 | 100 | 82 | 82 |
| | | | | 200 | 91 | 88 |
| | | | | 300 | 73 | 78 |
| 3-Cl | 3-F | C2H5 | 57/43 | 100 | 38 | 21 |
| | | | | 200 | 25 | 23 |
| | | | | 300 | 25 | 16 |
| 3-Cl | 3-F | CH3 | 60/40 | 75 | 33 | 34 |
| | | | | 150 | 33 | 47 |
| | | | | 300 | 33 | 30 |
| 3-Cl | 3,4-diF | CH3 | 56/44 | 100 | 31 | 18 |
| | | | | 200 | 19 | 9 |
| | | | | 300 | 16 | 9 |
| | | | | 60 | 71 | 78 |
| | | | | 180 | 36 | 22 |
| | | | | 360 | 32 | 26 |
| 3-Cl | 4-F | C2H5 | 27/73 | 50 | 11 | 19 |
| | | | | 100 | 22 | 29 |
| | | | | 150 | 22 | 17 |
| 3-Cl | 4-F | C2H5 | 57/43 | 100 | 38 | 9 |
| | | | | 200 | 25 | 20 |
| | | | | 300 | 13 | 21 |
| 3-Cl | 4-F | CH3 | 57/43 | 75 | 67 | 45 |
| | | | | 150 | 56 | 51 |
| | | | | 300 | 33 | 25 |
| 3-Cl | 4-F | CHMe2 | 60/40 | 100 | 50 | 29 |
| | | | | 200 | 25 | 18 |
| | | | | 300 | 25 | 36 |
| 3-Cl | 4-F | H | 55/45 | 75 | 67 | 60 |
| | | | | 150 | 56 | 43 |
| | | | | 300 | 44 | 28 |
| 3-Cl | 4-F | Na | 61/39 | 75 | 78 | 68 |
| | | | | 150 | 56 | 64 |
| | | | | 300 | 44 | 34 |

TABLE Ia (Continued)

| $A_1$, $B_1$* | $A_2$, $B_2$* | R | e/t | RATE (g/ha) | PERCENT OF CHECK HEIGHT | PERCENT OF CHECK PLANT DRY WEIGHT |
|---|---|---|---|---|---|---|
| 3-Cl | H | CH3 | 55/45 | 100 | 40 | 38 |
| | | | | 200 | 30 | 24 |
| | | | | 300 | 30 | 21 |
| 3-Cl-4-F | H | C2H5 | 63/37 | 100 | 70 | 56 |
| | | | | 200 | 40 | 39 |
| | | | | 300 | 20 | 30 |
| 3-CN | 3-Cl | C2H5 | 50/50 | 100 | 100 | 100 |
| | | | | 200 | 93 | 90 |
| | | | | 300 | 100 | 74 |
| 3-CN | H | C2H5 | 15/85 | 50 | 110 | 105 |
| | | | | 100 | 100 | 100 |
| | | | | 150 | 110 | 77 |
| 3-F | 3-F | CH3 | 57/43 | 100 | 24 | 9 |
| | | | | 200 | 18 | 5 |
| | | | | 300 | 12 | 4 |
| | | | ... | 60 | 43 | 49 |
| | | | | 180 | 29 | 25 |
| | | | | 360 | 29 | 29 |
| 3-F | 3-F | NH2[iPr]2 | 86/14 | 100 | 43 | 31 |
| | | | | 200 | 43 | 32 |
| | | | | 300 | 29 | 24 |
| 3-F | 3-F | NH2[iPr]2 | 55/45 | 100 | 29 | 24 |
| | | | | 200 | 43 | 22 |
| | | | | 300 | 29 | 17 |
| 3-F | 3,4-diF | CH3 | 53/47 | 100 | 29 | 26 |
| | | | | 200 | 43 | 24 |
| | | | | 300 | 43 | 20 |
| | | | | 60 | 48 | 30 |
| | | | | 180 | 38 | 22 |
| | | | | 360 | 48 | 28 |
| 3-F | 3,5-diCl | CH3 | 59/41 | 100 | 73 | 56 |
| | | | | 200 | 39 | 36 |
| | | | | 300 | 22 | 26 |
| 3-F | 4-F | CH3 | 57/43 | 100 | 38 | 31 |
| | | | | 200 | 25 | 25 |
| | | | | 300 | 25 | 20 |
| 3-F | H | C2H5 | 78/22 | 50 | 56 | 60 |
| | | | | 100 | 56 | 40 |
| | | | | 200 | 33 | 25 |
| 3-F | H | H | 60/40 | 75 | 70 | 38 |
| | | | | 150 | 50 | 47 |
| | | | | 300 | 40 | 36 |
| 3-NO2 | 3,5-diCl | H | 57/43 | 100 | 92 | 92 |
| | | | | 200 | 96 | 96 |
| | | | | 300 | 89 | 90 |

TABLE Ia (Continued)

| $A_1$, $B_1$* | $A_2$, $B_2$* | R | e/t | RATE (g/ha) | PERCENT OF CHECK | |
|---|---|---|---|---|---|---|
| | | | | | HEIGHT | PLANT DRY WEIGHT |
| 3-OCH3 | 3-OCH3 | C2H5 | 59/41 | 100 | 91 | 76 |
| | | | | 200 | 91 | 77 |
| | | | | 300 | 91 | 78 |
| 3-OCH3 | H | C2H5 | 60/40 | 100 | 89 | 95 |
| | | | | 200 | 100 | 87 |
| | | | | 300 | 100 | 100 |
| 3-OCHF2 | 3-F | CH3 | 59/41 | 30 | 124 | 131 |
| | | | | 90 | 100 | 78 |
| | | | | 180 | 76 | 62 |
| 3,4-diCl | H | H | 62/38 | 100 | 89 | 100 |
| | | | | 200 | 67 | 75 |
| | | | | 300 | 56 | 50 |
| 3,4-diF | 3-F | C2H5 | 60/40 | 100 | 56 | 40 |
| | | | | 200 | 38 | 20 |
| | | | | 300 | 19 | 9 |
| 3,4-diF | 3,4-diF | CH3 | 60/40 | 100 | 43 | 18 |
| | | | | 200 | 29 | 18 |
| | | | | 300 | 29 | 16 |
| 3,4-diF | H | C2H5 | 50/50 | 50 | 50 | 39 |
| | | | | 100 | 20 | 25 |
| | | | | 150 | 30 | 14 |
| 3,5-diCl | 3-F | H | 57/43 | 100 | 57 | 50 |
| | | | | 200 | 43 | 24 |
| | | | | 300 | 29 | 14 |
| 3,5-diCl | 3,5-diCl | C2H5 | 58/42 | 100 | 63 | 111 |
| | | | | 200 | 100 | 77 |
| | | | | 300 | 88 | 72 |
| 3,5-diCl | 4-F | CH3 | 55/45 | 100 | 38 | 11 |
| | | | | 200 | 25 | 26 |
| | | | | 300 | 25 | 25 |
| 3,5-diCl | H | CH3 | 58/42 | 100 | 40 | 31 |
| | | | | 200 | 30 | 32 |
| | | | | 300 | 30 | 25 |
| 4-Br | H | CH3 | 60/40 | 60 | 40 | 33 |
| | | | | 100 | 30 | 19 |
| | | | | 150 | 10 | 15 |
| 4-Cl | 3-Cl | C2H5 | 70/30 | 100 | 80 | 68 |
| | | | | 200 | 53 | 33 |
| | | | | 300 | 40 | 40 |
| 4-Cl | 3-F | CH3 | 57/43 | 100 | 18 | 21 |
| | | | | 200 | 9 | 6 |
| | | | | 300 | 14 | 10 |
| | | | | 60 | 68 | 99 |
| | | | | 180 | 43 | 59 |
| | | | | 360 | 29 | 29 |

TABLE Ia (Continued)

| $A_1$, $B_1$* | $A_2$, $B_2$* | R | e/t | RATE (g/ha) | PERCENT OF CHECK HEIGHT | PERCENT OF CHECK PLANT DRY WEIGHT |
|---|---|---|---|---|---|---|
| 4-Cl | 3,4-diF | CH3 | 58/42 | 100 | 43 | 35 |
| | | | | 200 | 29 | 27 |
| | | | | 300 | 43 | 26 |
| 4-Cl | 3,5-diCl | CH3 | 67/33 | 100 | 88 | 118 |
| | | | | 200 | 88 | 82 |
| | | | | 300 | 75 | 89 |
| 4-Cl | 4-Cl | C2H5 | 45/55 | 100 | 87 | 86 |
| | | | | 200 | 67 | 56 |
| | | | | 300 | 67 | 47 |
| 4-Cl | 4-F | C2H5 | 57/43 | 75 | 50 | 33 |
| | | | | 150 | 40 | 27 |
| | | | | 300 | 40 | 25 |
| 4-Cl | H | CH3 | 53/47 | 100 | 51 | 14 |
| | | | | 200 | 22 | 14 |
| | | | | 300 | 11 | 10 |
| | | | | 100 | 20 | 20 |
| | | | | 200 | 20 | 22 |
| | | | | 300 | 10 | 14 |
| | | | | 60 | 76 | 74 |
| | | | | 180 | 56 | 59 |
| | | | | 360 | 38 | 48 |
| | | | | 60 | 81 | 53 |
| | | | | 120 | 69 | 56 |
| | | | | 240 | 69 | 45 |
| | | | | 480 | 50 | 37 |
| | | | | 960 | 44 | 26 |
| | | | | 1920 | 38 | 26 |
| 4-Cl | H | CH3 | 5/95 | 30 | 88 | 84 |
| | | | | 90 | 65 | 49 |
| | | | | 180 | 38 | 36 |
| | | | | 30 | 75 | 57 |
| | | | | 90 | 56 | 27 |
| | | | | 180 | 50 | 23 |
| 4-F | 3-F | C2H5 | 58/42 | 100 | 33 | 4 |
| | | | | 200 | 22 | 24 |
| | | | | 300 | 22 | 13 |
| 4-F | 3-F | CH3 | 99/1 | 1250 | 88 | 94 |
| | | | | 2500 | 75 | 92 |
| | | | | 5000 | 50 | 51 |
| 4-F | 3-F | CH3 | 1/99 | 50 | 33 | 22 |
| | | | | 100 | 22 | 18 |
| | | | | 150 | 22 | 14 |
| 4-F | 3-F | CH3 | 62/38 | 75 | 44 | 36 |
| | | | | 150 | 33 | 36 |
| | | | | 300 | 33 | 32 |

TABLE Ia (Continued)

| $A_1$, $B_1$* | $A_2$, $B_2$* | R | e/t | RATE (g/ha) | PERCENT OF CHECK HEIGHT | PERCENT OF CHECK PLANT DRY WEIGHT |
|---|---|---|---|---|---|---|
| 4-F | 3-F | H | 57/43 | 75 | 78 | 59 |
| | | | | 150 | 44 | 55 |
| | | | | 300 | 44 | 24 |
| 4-F | 3-F | Na | 58/42 | 75 | 89 | 109 |
| | | | | 150 | 67 | 55 |
| | | | | 300 | 56 | 40 |
| 4-F | 3,5-diCl | C2H5 | 58/42 | 100 | 75 | 109 |
| | | | | 200 | 75 | 64 |
| | | | | 300 | 63 | 55 |
| 4-F | 4-F | C2H5 | 59/41 | 100 | 38 | 49 |
| | | | | 200 | 38 | 12 |
| | | | | 300 | 38 | 23 |
| 4-F | H | C2H5 | 60/40 | 100 | 67 | 53 |
| | | | | 200 | 56 | 40 |
| | | | | 300 | 33 | 26 |
| 4-NMe2 | H | C2H5 | 62/38 | 100 | 100 | 107 |
| | | | | 200 | 100 | 100 |
| | | | | 300 | 90 | 102 |
| 4-NO2 | H | H | 10/90 | 50 | 114 | 61 |
| | | | | 100 | 71 | 34 |
| | | | | 200 | 29 | 23 |
| H | 2-CH3 | C2H5 | 64/36 | 100 | 100 | 125 |
| | | | | 200 | 89 | 88 |
| | | | | 300 | 100 | 89 |
| H | 2-Cl | C2H5 | 59/41 | 100 | 89 | 134 |
| | | | | 200 | 100 | 94 |
| | | | | 300 | 89 | 105 |
| H | 2-F | C2H5 | 57/43 | 100 | 94 | 81 |
| | | | | 200 | 106 | 84 |
| | | | | 300 | 94 | 78 |
| H | 2-NO2 | C2H5 | 14/86 | 100 | 111 | 97 |
| | | | | 200 | 89 | 99 |
| | | | | 300 | 111 | 101 |
| H | 2,4-diCl | CH3 | 54/46 | 100 | 100 | 130 |
| | | | | 200 | 82 | 72 |
| | | | | 300 | 91 | 62 |
| H | 3-Cl | C2H5 | 74/26 | 100 | 56 | 28 |
| | | | | 200 | 22 | 16 |
| | | | | 300 | 22 | 20 |
| H | 3-Cl | CH3 | 57/43 | 100 | 73 | 54 |
| | | | | 200 | 91 | 104 |
| | | | | 300 | 91 | 72 |
| H | 3-Cl | CH3 | 15/85 | 100 | 27 | 3 |
| | | | | 200 | 27 | 27 |
| | | | | 300 | 27 | 33 |

TABLE Ia (Continued)

| $A_1$, $B_1$* | $A_2$, $B_2$* | R | e/t | RATE (g/ha) | PERCENT OF CHECK | |
|---|---|---|---|---|---|---|
| | | | | | HEIGHT | PLANT DRY WEIGHT |
| H | 3-F | CH3 | 55/45 | 75 | 67 | 45 |
| | | | | 150 | 56 | 47 |
| | | | | 300 | 44 | 35 |
| | | | | 75 | 87 | 60 |
| | | | | 150 | 87 | 58 |
| | | | | 300 | 33 | 26 |
| | | | | 75 | 80 | 57 |
| | | | | 150 | 40 | 30 |
| | | | | 300 | 25 | 15 |
| | | | | 100 | 47 | 28 |
| | | | | 200 | 29 | 19 |
| | | | | 300 | 24 | 17 |
| | | | | 100 | 26 | 24 |
| | | | | 200 | 22 | 12 |
| | | | | 300 | 11 | 14 |
| | | | | 100 | 20 | 18 |
| | | | | 200 | 30 | 14 |
| | | | | 300 | 20 | 15 |
| | | | | 100 | 33 | 8 |
| | | | | 200 | 22 | 25 |
| | | | | 300 | 22 | 32 |
| | | | | 100 | 57 | 38 |
| | | | | 200 | 29 | 18 |
| | | | | 300 | 43 | 27 |
| | | | | 100 | 43 | 31 |
| | | | | 200 | 43 | 17 |
| | | | | 300 | 29 | 23 |
| | | | | 60 | 47 | 52 |
| | | | | 180 | 50 | 58 |
| | | | | 360 | 29 | 30 |
| H | 3-F | CH3 | 5/95 | 75 | 44 | 45 |
| | | | | 150 | 44 | 39 |
| | | | | 300 | 44 | 37 |
| | | | | 60 | 71 | 55 |
| | | | | 180 | 32 | 29 |
| | | | | 360 | 29 | 31 |
| H | 3-F | H | 65/35 | 75 | 80 | 61 |
| | | | | 150 | 60 | 50 |
| | | | | 300 | 60 | 44 |
| H | 3-F | H | 5/95 | 75 | 44 | 33 |
| | | | | 150 | 44 | 39 |
| | | | | 300 | 33 | 27 |
| H | 3,4-diCl | CH3 | 54/46 | 100 | 40 | 61 |
| | | | | 200 | 40 | 48 |
| | | | | 300 | 30 | 32 |

TABLE Ia (Continued)

| $A_1$, $B_1$* | $A_2$, $B_2$* | R | e/t | RATE (g/ha) | PERCENT OF CHECK HEIGHT | PLANT DRY WEIGHT |
|---|---|---|---|---|---|---|
| H | 3,4-diF | CH3 | 58/42 | 100 | 29 | 16 |
| | | | | 200 | 29 | 11 |
| | | | | 300 | 29 | 14 |
| | | | | 60 | 67 | 46 |
| | | | | 180 | 48 | 40 |
| | | | | 360 | 38 | 34 |
| H | 3,5-diCl | C2H5 | 56/44 | 100 | 80 | 60 |
| | | | | 200 | 60 | 48 |
| | | | | 300 | 30 | 38 |
| H | 4-Cl | CH3 | 57/43 | 100 | 70 | 101 |
| | | | | 200 | 90 | 85 |
| | | | | 300 | 80 | 85 |
| H | 4-F | C2H5 | 57/43 | 100 | 55 | 41 |
| | | | | 200 | 36 | 30 |
| | | | | 300 | 36 | 27 |
| H | 4-F | H | 56/44 | 75 | 80 | 53 |
| | | | | 150 | 70 | 50 |
| | | | | 300 | 50 | 39 |
| H | 4-OCF3 | C2H5 | 5/95 | 50 | 100 | 91 |
| | | | | 100 | 111 | 126 |
| | | | | 200 | 100 | 94 |
| H | H | C2H5 | 3/97 | 75 | 80 | 47 |
| | | | | 150 | 70 | 39 |
| | | | | 300 | 50 | 28 |
| H | H | CH3 | 5/95 | 60 | 76 | 92 |
| | | | | 180 | 53 | 48 |
| | | | | 360 | 35 | 40 |
| H | H | CH3 | 68/32 | 100 | 83 | 79 |
| | | | | 200 | 71 | 76 |
| | | | | 300 | 50 | 55 |
| H | H | H | 58/42 | 100 | 92 | 67 |
| | | | | 200 | 92 | 64 |
| | | | | 300 | 75 | 64 |
| 3-Cl | H | NH2Me2 | 65/35 | 500 | 83 | 51 |
| | | | | 750 | 65 | 54 |
| | | | | 1000 | 63 | 28 |
| 3-Cl | H | CH3 | 5/95 | 5 | 110 | 98 |
| | | | | 12 | 113 | 70 |
| | | | | 25 | 98 | 63 |
| EMBARK® | | | | 375 | 59** | 34** |

a) Ratio of erythro to threo isomers

*Where only one substituent is specified for $A_1$, $B_1$ or $A_2$, $B_2$, the other is hydrogen.

**AVERAGE of 5 TESTS ON TALL FESCUE

TABLE Ib

Regulating the Growth of Kentucky Bluegrass

(*Poa pratensis*)

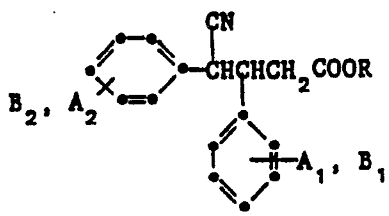

| $A_1$, $B_1$* | $A_2$, $B_2$* | R | e/t[a] | RATE (g/ha) | PERCENT OF CHECK HEIGHT | PERCENT OF CHECK PLANT DRY WEIGHT |
|---|---|---|---|---|---|---|
| 2-F | 3-F | CH3 | 53/47 | 60 | 40 | 38 |
| | | | | 180 | 40 | 43 |
| | | | | 360 | 40 | 28 |
| 3-Cl | 3-F | CH3 | 60/40 | 60 | 88 | 118 |
| | | | | 180 | 69 | 70 |
| | | | | 360 | 63 | 77 |
| 3-Cl | 3,4-diF | CH3 | 56/44 | 60 | 75 | 114 |
| | | | | 180 | 75 | 84 |
| | | | | 360 | 63 | 64 |
| 3-Cl | 3,4-diF | CH3 | 56/44 | 60 | 80 | 86 |
| | | | | 180 | 55 | 59 |
| | | | | 360 | 35 | 23 |
| 3-Cl | 4-F | CH3 | 57/43 | 60 | 100 | 123 |
| | | | | 180 | 81 | 91 |
| | | | | 360 | 63 | 77 |
| 3-F | 3-F | CH3 | 57/43 | 60 | 40 | 41 |
| | | | | 180 | 40 | 31 |
| | | | | 360 | 20 | 26 |
| 3-F | 3-F | CH3 | 57/43 | 60 | 80 | 80 |
| | | | | 180 | 50 | 61 |
| | | | | 360 | 40 | 39 |
| 3-F | 3-F | H | 56/44 | 60 | 50 | 77 |
| | | | | 180 | 33 | 44 |
| | | | | 360 | 33 | 44 |
| 3-F | 3-F | Na | 55/45 | 60 | 100 | 91 |
| | | | | 180 | 60 | 43 |
| | | | | 360 | 40 | 40 |
| 3-F | 3-F | NH2[iPr]2 | 55/45 | 60 | 67 | 62 |
| | | | | 180 | 33 | 38 |
| | | | | 360 | 33 | 33 |
| 3-F | 3,4-diF | CH3 | 53/47 | 60 | 33 | 48 |
| | | | | 180 | 33 | 46 |
| | | | | 360 | 33 | 35 |

TABLE Ib (Continued)

| $A_1$, $B_1$* | $A_2$, $B_2$* | R | e/t | RATE (g/ha) | PERCENT OF CHECK | |
|---|---|---|---|---|---|---|
| | | | | | HEIGHT | PLANT DRY WEIGHT |
| 3-F | 3,4-diF | CH3 | 53/47 | 60 | 63 | 49 |
| | | | | 180 | 38 | 32 |
| | | | | 360 | 38 | 27 |
| 3-F | 4-F | CH3 | 57/43 | 60 | 60 | 81 |
| | | | | 180 | 40 | 43 |
| | | | | 360 | 40 | 34 |
| 3-OCHF2 | 3-F | CH3 | 59/41 | 30 | 119 | 135 |
| | | | | 90 | 88 | 89 |
| | | | | 180 | 75 | 68 |
| 3,4-diF | 3,4-diF | CH3 | 60/40 | 60 | 83 | 92 |
| | | | | 180 | 67 | 69 |
| | | | | 360 | 50 | 42 |
| 3,4-diF | H | C2H5 | 50/50 | 30 | 100 | 124 |
| | | | | 90 | 71 | 94 |
| | | | | 180 | 57 | 80 |
| 4-Cl | 3-F | CH3 | 57/43 | 60 | 88 | 130 |
| | | | | 180 | 63 | 61 |
| | | | | 360 | 63 | 52 |
| 4-Cl | 3-F | CH3 | 57/43 | 60 | 80 | 73 |
| | | | | 180 | 50 | 48 |
| | | | | 360 | 40 | 32 |
| 4-Cl | 3,4-diF | CH3 | 58/42 | 60 | 70 | 78 |
| | | | | 180 | 50 | 53 |
| | | | | 360 | 40 | 39 |
| 4-Cl | H | CH3 | 53/47 | 60 | 133 | 138 |
| | | | | 180 | 117 | 108 |
| | | | | 360 | 83 | 65 |
| | | | | 60 | 87 | 71 |
| | | | | 120 | 80 | 56 |
| | | | | 240 | 53 | 33 |
| | | | | 480 | 40 | 16 |
| | | | | 960 | 33 | 9 |
| | | | | 1920 | 33 | 15 |
| 4-Cl | H | CH3 | 5/95 | 60 | 50 | 59 |
| | | | | 180 | 40 | 51 |
| | | | | 360 | 40 | 43 |
| | | | | 30 | 67 | 50 |
| | | | | 90 | 50 | 54 |
| | | | | 180 | 50 | 27 |
| | | | | 30 | 93 | 71 |
| | | | | 90 | 57 | 27 |
| | | | | 180 | 43 | 22 |
| 4-F | 3-F | CH3 | 62/38 | 60 | 57 | 88 |
| | | | | 180 | 29 | 50 |
| | | | | 360 | 29 | 52 |
| 4-F | 4-F | C2H5 | 59/41 | 60 | 57 | 102 |
| | | | | 180 | 43 | 88 |
| | | | | 360 | 43 | 62 |

<u>TABLE Ib</u> (Continued)

| $A_1$, $B_1$* | $A_2$, $B_2$* | R | e/t | RATE (g/ha) | PERCENT OF CHECK HEIGHT | PERCENT OF CHECK PLANT DRY WEIGHT |
|---|---|---|---|---|---|---|
| H | 3-F | CH3 | 55/45 | 60 | 43 | 60 |
| | | | | 180 | 43 | 56 |
| | | | | 360 | 29 | 36 |
| | | | | 60 | 75 | 88 |
| | | | | 180 | 63 | 58 |
| | | | | 360 | 63 | 59 |
| | | | | 60 | 100 | 108 |
| | | | | 180 | 83 | 85 |
| | | | | 360 | 67 | 62 |
| H | 3-F | CH3 | 5/95 | 60 | 50 | 55 |
| | | | | 180 | 63 | 38 |
| | | | | 360 | 63 | 31 |
| | | | | 60 | 55 | 45 |
| | | | | 180 | 40 | 25 |
| | | | | 360 | 30 | 25 |
| H | 3,4-diF | CH3 | 58/42 | 60 | 60 | 73 |
| | | | | 180 | 50 | 47 |
| | | | | 360 | 50 | 41 |
| | | | | 60 | 63 | 43 |
| | | | | 180 | 44 | 27 |
| | | | | 360 | 38 | 32 |
| H | 4-F | C2H5 | 57/43 | 60 | 75 | 78 |
| | | | | 180 | 63 | 63 |
| | | | | 360 | 63 | 47 |
| H | H | CH3 | 5/95 | 60 | 63 | 64 |
| | | | | 180 | 50 | 38 |
| | | | | 360 | 50 | 47 |
| | | | | 60 | 92 | 92 |
| | | | | 180 | 75 | 38 |
| | | | | 360 | 67 | 50 |
| EMBARK® | | | - | 375 | 56 ** | 48** |

a)Ratio of <u>erythro</u> to <u>threo</u> isomers

*Where only one substituent is specified for $A_1$, $B_1$ or $A_2$, $B_2$, the other is hydrogen.

**AVERAGE OF 2 TESTS ON KENTUCKY BLUEGRASS

TABLE Ic

Regulating the Growth of Perennial Ryegrass

(*Lolium perenne*)

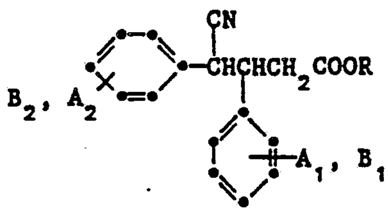

| $A_1$, $B_1$* | $A_2$, $B_2$* | R | e/t | RATE | PERCENT OF CHECK HEIGHT | PERCENT OF CHECK PLANT DRY WEIGHT |
|---|---|---|---|---|---|---|
| 2-F | 3-F | CH3 | 53/47 | 60 | 100 | 73 |
| | | | | 180 | 73 | 55 |
| | | | | 360 | 45 | 37 |
| 3-Cl | 3-F | CH3 | 60/40 | 60 | 83 | 64 |
| | | | | 180 | 58 | 44 |
| | | | | 360 | 50 | 35 |
| 3-Cl | 3,4-diF | CH3 | 56/44 | 60 | 67 | 51 |
| | | | | 180 | 50 | 38 |
| | | | | 360 | 42 | 24 |
| | | | | 60 | 70 | 83 |
| | | | | 180 | 50 | 44 |
| | | | | 360 | 30 | 44 |
| 3-Cl | 4-F | CH3 | 57/43 | 60 | 92 | 70 |
| | | | | 180 | 92 | 69 |
| | | | | 360 | 83 | 64 |
| 3-F | 3-F | CH3 | 57/43 | 60 | 73 | 64 |
| | | | | 180 | 55 | 34 |
| | | | | 360 | 36 | 27 |
| | | | | 60 | 55 | 54 |
| | | | | 180 | 40 | 34 |
| | | | | 360 | 30 | 27 |
| 3-F | 3-F | H | 56/44 | 60 | 80 | 68 |
| | | | | 180 | 70 | 47 |
| | | | | 360 | 50 | 33 |
| 3-F | 3-F | Na | 55/45 | 60 | 82 | 79 |
| | | | | 180 | 64 | 50 |
| | | | | 360 | 64 | 40 |
| 3-F | 3-F | NH2[iPr]2 | 55/45 | 60 | 90 | 75 |
| | | | | 180 | 70 | 58 |
| | | | | 360 | 60 | 31 |

TABLE Ic (Continued)

| $A_1$, $B_1$* | $A_2$, $B_2$* | R | e/t | RATE | PERCENT OF CHECK HEIGHT | PERCENT OF CHECK PLANT DRY WEIGHT |
|---|---|---|---|---|---|---|
| 3-F | 3,4-diF | CH3 | 53/47 | 60 | 70 | 57 |
| | | | | 180 | 40 | 31 |
| | | | | 360 | 40 | 23 |
| | | | | 60 | 48 | 23 |
| | | | | 180 | 24 | 12 |
| | | | | 360 | 24 | 9 |
| 3-F | 4-F | CH3 | 57/43 | 60 | 91 | 88 |
| | | | | 180 | 82 | 60 |
| | | | | 360 | 73 | 53 |
| 3-OCHF2 | 3-F | CH3 | 59/41 | 30 | 72 | 49 |
| | | | | 90 | 80 | 54 |
| | | | | 180 | 64 | 52 |
| 3,4-diF | 3,4-diF | CH3 | 60/40 | 60 | 90 | 85 |
| | | | | 180 | 80 | 69 |
| | | | | 360 | 80 | 55 |
| 3,4-diF | H | C2H5 | 50/50 | 30 | 92 | 103 |
| | | | | 90 | 92 | 84 |
| | | | | 180 | 92 | 71 |
| 4-Cl | 3-F | CH3 | 57/43 | 60 | 92 | 61 |
| | | | | 180 | 50 | 32 |
| | | | | 360 | 42 | 17 |
| | | | | 60 | 60 | 46 |
| | | | | 180 | 50 | 46 |
| | | | | 360 | 45 | 51 |
| 4-Cl | 3,4-diF | CH3 | 58/42 | 60 | 75 | 72 |
| | | | | 180 | 42 | 35 |
| | | | | 360 | 42 | 29 |
| 4-Cl | H | CH3 | 53/47 | 60 | 83 | 85 |
| | | | | 180 | 58 | 55 |
| | | | | 360 | 42 | 38 |
| | | | | 60 | 100 | 100 |
| | | | | 120 | 100 | 112 |
| | | | | 240 | 89 | 97 |
| | | | | 480 | 83 | 83 |
| | | | | 960 | 72 | 72 |
| | | | | 1920 | 56 | 48 |
| 4-Cl | H | CH3 | 5/95 | 60 | 83 | 63 |
| | | | | 180 | 58 | 76 |
| | | | | 360 | 42 | 32 |
| | | | | 30 | 67 | 67 |
| | | | | 90 | 46 | 40 |
| | | | | 180 | 29 | 33 |
| | | | | 30 | 100 | 98 |
| | | | | 90 | 94 | 83 |
| | | | | 180 | 75 | 61 |

TABLE Ic (Continued)

| $A_1$, $B_1$* | $A_2$, $B_2$* | R | e/t | RATE | PERCENT OF CHECK HEIGHT | PERCENT OF CHECK PLANT DRY WEIGHT |
|---|---|---|---|---|---|---|
| 4-F | 3-F | CH3 | 62/38 | 60 | 75 | 73 |
| | | | | 180 | 75 | 53 |
| | | | | 360 | 67 | 37 |
| 4-F | 4-F | C2H5 | 59/41 | 60 | 92 | 99 |
| | | | | 180 | 92 | 72 |
| | | | | 360 | 67 | 47 |
| H | 3-F | CH3 | 55/45 | 60 | 83 | 77 |
| | | | | 180 | 83 | 60 |
| | | | | 360 | 67 | 47 |
| | | | | 60 | 111 | 98 |
| | | | | 180 | 89 | 77 |
| | | | | 360 | 78 | 74 |
| | | | | 60 | 58 | 58 |
| | | | | 180 | 79 | 67 |
| | | | | 360 | 67 | 57 |
| H | 3-F | CH3 | 5/95 | 60 | 100 | 84 |
| | | | | 180 | 44 | 35 |
| | | | | 360 | 44 | 29 |
| | | | | 60 | 60 | 61 |
| | | | | 180 | 30 | 24 |
| | | | | 360 | 40 | 29 |
| H | 3,4-diF | CH3 | 58/42 | 60 | 92 | 72 |
| | | | | 180 | 42 | 40 |
| | | | | 360 | 42 | 35 |
| | | | | 60 | 56 | 40 |
| | | | | 180 | 32 | 17 |
| | | | | 360 | 32 | 21 |
| H | 4-F | C2H5 | 57/43 | 60 | 100 | 92 |
| | | | | 180 | 100 | 84 |
| | | | | 360 | 100 | 92 |
| H | H | CH3 | 5/95 | 60 | 89 | 103 |
| | | | | 180 | 56 | 81 |
| | | | | 360 | 78 | 73 |
| | | | | 60 | 83 | 73 |
| | | | | 180 | 58 | 67 |
| | | | | 360 | 38 | 42 |
| EMBARK® | | | | 375 | 47 ** | 41 ** |

a) Ratio of erythro to threo isomers

*Where only one substituent is specified for $A_1$, $B_1$ or $A_2$, $B_2$, the other is hydrogen.

**AVERAGE OF 3 TESTS ON PERENNIAL RYEGRASS

## TABLE Id

### Regulating the Growth of Bermudagrass (*Cynodon* sp)

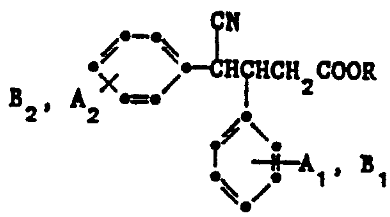

| $A_1$, $B_1$* | $A_2$, $B_2$* | R | e/t[a] | RATE (g/ha) | PERCENT OF CHECK: HEIGHT | PERCENT OF CHECK: PLANT DRY WEIGHT |
|---|---|---|---|---|---|---|
| 3-Cl | 3-F | CH3 | 60/40 | 75 | 140 | 87 |
| | | | | 150 | 110 | 91 |
| | | | | 300 | 80 | 59 |
| 3-Cl | 3,4-diF | CH3 | 56/44 | 60 | 50 | 61 |
| | | | | 180 | 45 | 31 |
| | | | | 360 | 40 | 38 |
| 3-Cl | 4-F | CH3 | 57/43 | 75 | 100 | 107 |
| | | | | 150 | 110 | 126 |
| | | | | 300 | 90 | 103 |
| 3-Cl | 4-F | H | 55/45 | 75 | 90 | 114 |
| | | | | 150 | 110 | 104 |
| | | | | 300 | 100 | 89 |
| 3-Cl | 4-F | Na | 61/39 | 75 | 120 | 120 |
| | | | | 150 | 130 | 118 |
| | | | | 300 | 90 | 75 |
| 3-F | 3-F | CH3 | 57/43 | 60 | 55 | 48 |
| | | | | 180 | 40 | 34 |
| | | | | 360 | 40 | 45 |
| 3-F | 3,4-diF | CH3 | 53/47 | 60 | 61 | 72 |
| | | | | 180 | 56 | 59 |
| | | | | 360 | 56 | 65 |
| 3-F | H | H | 60/40 | 75 | 58 | 87 |
| | | | | 150 | 58 | 90 |
| | | | | 300 | 67 | 108 |
| 3-OCHF2 | 3-F | CH3 | 59/41 | 30 | 94 | 97 |
| | | | | 90 | 100 | 100 |
| | | | | 180 | 78 | 78 |
| 4-Cl | 3-F | CH3 | 57/43 | 60 | 60 | 61 |
| | | | | 180 | 50 | 66 |
| | | | | 360 | 50 | 53 |
| 4-Cl | 4-F | C2H5 | 57/43 | 75 | 58 | 87 |
| | | | | 150 | 67 | 106 |
| | | | | 300 | 67 | 82 |

TABLE Id (Continued)

| $A_1$, $B_1$* | $A_2$, $B_2$* | R | e/t[a] | RATE (g/ha) | PERCENT OF CHECK | |
|---|---|---|---|---|---|---|
| | | | | | HEIGHT | PLANT DRY WEIGHT |
| 4-Cl | H | CH3 | 53/47 | 60 | 53 | 90 |
| | | | | 180 | 47 | 66 |
| | | | | 360 | 33 | 64 |
| 4-Cl | H | CH3 | 5/95 | 30 | 63 | 59 |
| | | | | 90 | 40 | 48 |
| | | | | 180 | 33 | 49 |
| 4-F | 3-F | CH3 | 62/38 | 75 | 100 | 73 |
| | | | | 150 | 100 | 78 |
| | | | | 300 | 110 | 83 |
| 4-F | 3-F | H | 57/43 | 75 | 80 | 92 |
| | | | | 150 | 60 | 61 |
| | | | | 300 | 100 | 110 |
| 4-F | 3-F | Na | 58/42 | 75 | 120 | 119 |
| | | | | 150 | 90 | 91 |
| | | | | 300 | 80 | 91 |
| H | 3-F | CH3 | 55/45 | 75 | 90 | 86 |
| | | | | 150 | 60 | 55 |
| | | | | 300 | 80 | 81 |
| | | | | 75 | 93 | 85 |
| | | | | 150 | 93 | 98 |
| | | | | 300 | 93 | 77 |
| | | | | 75 | 100 | 85 |
| | | | | 150 | 100 | 76 |
| | | | | 300 | 80 | 65 |
| | | | | 60 | 109 | 101 |
| | | | | 120 | 100 | 84 |
| | | | | 240 | 91 | 68 |
| | | | | 480 | 91 | 54 |
| | | | | 960 | 76 | 41 |
| | | | | 60 | 33 | 59 |
| | | | | 180 | 33 | 78 |
| | | | | 360 | 27 | 64 |
| H | 3-F | CH3 | 5/95 | 75 | 70 | 67 |
| | | | | 150 | 70 | 68 |
| | | | | 300 | 50 | 55 |
| | | | | 60 | 50 | 35 |
| | | | | 180 | 35 | 26 |
| | | | | 360 | 40 | 34 |
| H | 3-F | H | 65/35 | 75 | 58 | 102 |
| | | | | 150 | 58 | 89 |
| | | | | 300 | 42 | 66 |

TABLE Id (Continued)

| $A_1$, $B_1$* | $A_2$, $B_2$* | R | e/t[a] | RATE (g/ha) | PERCENT OF CHECK HEIGHT | PERCENT OF CHECK PLANT DRY WEIGHT |
|---|---|---|---|---|---|---|
| H | 3-F | H | 5/95 | 75 | 80 | 70 |
| | | | | 150 | 40 | 53 |
| | | | | 300 | 40 | 51 |
| H | 3,4-diF | CH3 | 58/42 | 60 | 56 | 60 |
| | | | | 180 | 50 | 43 |
| | | | | 360 | 50 | 41 |
| H | 4-F | H | 56/44 | 75 | 42 | 98 |
| | | | | 150 | 67 | 128 |
| | | | | 300 | 42 | 69 |
| H | H | C2H5 | 3/97 | 75 | 83 | 139 |
| | | | | 150 | 50 | 83 |
| | | | | 300 | 58 | 87 |
| H | H | CH3 | 5/95 | 60 | 40 | 66 |
| | | | | 180 | 40 | 68 |
| | | | | 360 | 27 | 51 |

a) Ratio of erythro to threo isomers

*Where only one substituent is specified for $A_1$, $B_1$ or $A_2$, $B_2$, the other is hydrogen.

Using the procedure described in Example 1, the efficacy of two cyanobutyrates in reducing the height, plant fresh weight and plant dry weight of tall fescue in direct comparison with two commercial compounds registered for use in turf is demonstrated in Tables Ie and If.

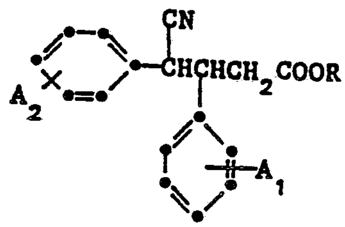

TABLE Ie

Side-by-side Comparison of the Inhibition of Growth of Tall Fescue

(*Festuca arundinaceae*)

| Compound | Rate (g/ha) | Height (cm) | Plant Fresh Weight (g) | Plant Dry Weight (g) | Percent of Check: Height | Percent of Check: Plant Fresh Weight | Percent of Check: Plant Dry Weight | Foliar Phytotoxicity |
|---|---|---|---|---|---|---|---|---|
| $A_1$ = 4-Cl | 15 | 9.3 | 21.7 | 3.7 | 96 | 95 | 95 | 0 |
| $A_2$ = H | 30 | 8.3 | 16.0 | 2.6 | 86 | 70 | 67 | 0 |
| R = $CH_3$ | 60 | 6.7 | 12.9 | 2.1 | 69 | 56 | 54 | 0 |
| e/t = 5/95 | 120 | 5.7 | 5.2 | 0.9 | 59 | 23 | 23 | 0 |
| EMBARK® | 50 | 9.3 | 19.3 | 2.9 | 96 | 84 | 74 | 0 |
| | 100 | 8.0 | 13.9 | 2.1 | 82 | 61 | 54 | 0 |
| | 500 | 5.7 | 6.0 | 1.0 | 59 | 26 | 26 | 0 |
| LIMIT® | 500 | 8.7 | 18.4 | 3.2 | 90 | 80 | 82 | 0 |
| | 1000 | 6.3 | 5.7 | 1.0 | 65 | 25 | 26 | 0 |
| | 2000 | 5.0 | 5.2 | 1.0 | 52 | 23 | 26 | 0 |
| Check | - | 9.7 | 22.9 | 3.9 | 100 | 100 | 100 | 0 |

TABLE If

Side-by-side Comparison of the Inhibition of Growth of Tall Fescue

(*Festuca arundinaceae*)

| Compound | Rate (g/ha) | Height (cm) | Plant Fresh Weight (g) | Plant Dry Weight (g) | Percent of Check: Height | Percent of Check: Plant Fresh Weight | Percent of Check: Plant Dry Weight | Foliar Phytotoxicity |
|---|---|---|---|---|---|---|---|---|
| $A_1$ = H | 15 | 7.0 | 9.7 | 1.5 | 100 | 73 | 60 | 0 |
| $A_2$ = 3-F | 30 | 6.0 | 5.6 | 1.0 | 86 | 42 | 40 | 0 |
| R = $CH_3$ | 60 | 5.0 | 3.4 | 0.7 | 71 | 26 | 28 | 1 |
| e/t = 5/95 | 120 | 3.3 | 2.9 | 0.8 | 47 | 22 | 32 | 1 |
| EMBARK® | 50 | 5.0 | 6.3 | 1.3 | 71 | 48 | 52 | 0 |
| | 100 | 4.3 | 5.0 | 0.9 | 61 | 38 | 36 | 0 |
| | 500 | 2.3 | 1.8 | 0.4 | 33 | 14 | 16 | 2 |
| LIMIT® | 500 | 6.3 | 6.0 | 1.1 | 90 | 45 | 44 | 0 |
| | 1000 | 3.3 | 3.7 | 0.8 | 47 | 28 | 32 | 0.3 |
| | 2000 | 3.3 | 2.2 | 0.5 | 47 | 17 | 20 | 1.7 |
| Check | - | 7.0 | 13.2 | 2.5 | 100 | 100 | 100 | 0 |

Using the procedure discribed in Example 1, the efficacy of pyridyl-, halopyridyl- and quaternized pyridylcyanobutyrates in reducing the height, fresh weight and dry weight of tall fescue is illustrated in Table Ig.

TABLE Ig

Regulating the Growth of Tall Fescue

(*Festuca arundinaceae*)

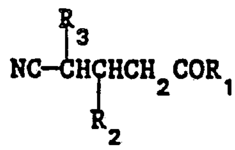

| Compound | | | | | Percent of Check | |
|---|---|---|---|---|---|---|
| $R_2$ | $R_3$ | $R_1$ | e/t | Rate (g/ha) | Height | Plant Dry Weight |
| 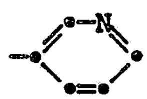 | 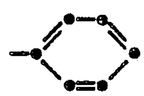 | $OC_2H_5$ | 51/49 | 50 | 67 | 79 |
| | | | | 100 | 67 | 85 |
| | | | | 200 | 75 | 93 |
| 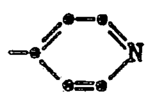 | 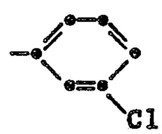 | $OCH_3$ | 52/48 | 50 | 89 | 112 |
| | | | | 100 | 92 | 94 |
| | | | | 150 | 111 | 114 |
| 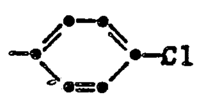 | 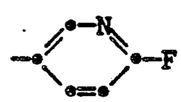 | $OCH_3$ | 62/38 | 60 | 81 | 73 |
| | | | | 180 | 67 | 62 |
| | | | | 360 | 48 | 30 |
| 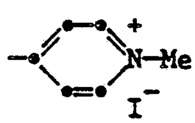 | 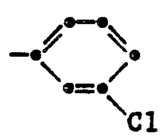 | $OCH_3$ | 57/43 | 100 | 100 | 88 |
| | | | | 200 | 82 | 74 |
| | | | | 300 | 100 | 110 |

EXAMPLE 2

Regulating the Height of Wheat Plants

Wheat (*Triticum vulgare* variety Fenman) is planted in a greenhouse loamy sand soil mixture using 6 x 5 inch fiber pots (5 plants per pot) and is grown to Zadock's 23 (three tillers) stage for treatment. A solution of the experimental compound is prepared in a mixture of acetone and water (60:40 respectively by volume) containing a Biofilm® surfactant at 0.25% of the volume of solution. Three application rates of a compound are broadcast sprayed on the plants using a track sprayer with a fan-tip nozzle at an equivalent sprayer volume of 380 liters per hectare. The solution used to spray the check plants is prepared without an experimental compound but is otherwise identical. The plants are air-dried after spraying and are placed on greenhouse benches in a Randomized Complete Block Design (RCBD). Three replicates per rate are sprayed. The plants are watered and cared for in accordance with conventional greenhouse procedures until harvest. Wheat is harvested after the check plants have shed pollen at the indicated stage (STG:Z68-84).

Data is obtained for height (HT), the number of heads or fruit (FRT), fresh weight of heads (YIELD FWT) and plant fresh weight (PLANT FWT: all nonfruiting plant parts above the soil level). Whenever the fruit or plant fresh weight exceeds 115% of the corresponding weight of the check, the fruit and/or plants are dried in an oven at 70-80°C for two days and the resulting fruit and/or plant dry weight (DWT) are recorded. The results are tabulated in Table II as a mean (M) of the three replicates and as a percent (P) of the check. Also recorded are the ratings of morphological characteristics which include chlorophyll (CHLORO),

branching (BRANCH), stem stiffness (STIFF), stem diameter (S DIAM), length of the first two internodes elongating after treatment (L INOD), length of all internodes above the lower internodes (U INOD), time of fruit emergence or heading (TM FEM) and phytotoxicity (PHYTOT). The morphological characteristics are rated on a scale of 1-9 where a 5 indicates that a given trait appears to be normal or the same as an untreated control plants. Ratings 6-9 indicate an increase in the evaluated characteristic while ratings 1-4 indicate a decrease.

| Rating | % of Control | Meaning |
|---|---|---|
| 1 | <55 | Extreme decrease or 2 or more growth stages behind the control. |
| 2 | 55-69 | Severe decrease or 1&1/2 growth stages behind controls. |
| 3 | 70-84 | Substantial decrease or 1 growth stage behind controls. |
| 4 | 85-92 | Visible decrease or 1/2 growth stage behind controls. |
| 5 | 93-107 | Normal (like control plants). |
| 6 | 108-115 | Visible enhancement or 1/2 growth stage ahead of controls. |
| 7 | 116-129 | Substantial enhancement or 1 growth stage ahead of controls. |
| 8 | 130-145 | Outstanding enhancement or 1&1/2 growth stages ahead of controls. |
| 9 | ≥146 | Exceptional enhancement or 2 growth stages ahead of controls. |

Phytotoxic effects are rated on a different scale based upon a visual observation of plant stand, vigor, malformation, size, chlorosis and overall plant appearance as compared with a check.

| Rating | Description | % Control (Compared To Check) |
|---|---|---|
| 0 | No effect | 0 |
| 1 | Trace effect | 1-5 |
| 2 | Slight effect | 6-15 |
| 3 | Moderate effect | 16-29 |
| 4 | Injury | 30-44 |
| 5 | Definite injury | 45-64 |
| 6 | Herbicidal effect | 65-79 |
| 7 | Good herbicidal effect | 80-90 |
| 8 | Approaching complete kill | 91-99 |
| 9 | Complete kill | 100 |

The data in Table II clearly indicate that the application of selected cyanobutyrates of the present invention can be used at the specified rate to regulate the growth of wheat to produce shorter plants without adversely affecting the yield.

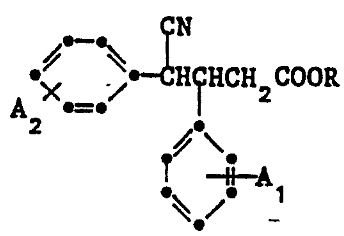

TABLE II

Regulating the Growth of Wheat by Selected Cyanobutyrates

| Compound | | | | | | | | YIELD | | | PLANT | | | | | | | | | |
|---|---|---|---|---|---|---|---|---|---|---|---|---|---|---|---|---|---|---|---|---|
| $A_1$ | $A_2$ | R | e/t | Data | STG | Rate g/ha | # of FRT | FWT g | DWT g | HT cm | FWT g | DWT g | CHLORO | BRANCH | STIFF | SDIAM | LINOD | UINOD | TMFEM | PHYTOT |
| 4-F | H | $C_2H_5$ | 60/40 | M | 80 | 2.5 | 22 | 73 | - | 55 | 159 | - | 5 | 5 | 5 | 5 | 5 | 5 | 5 | 0 |
| | | | | P | | | 103 | 85 | - | 90 | 97 | - | | | | | | | | |
| | | | | M | 80 | 5.0 | 22 | 85 | - | 58 | 168 | - | 5 | 5 | 5 | 5 | 5 | 5 | 5 | 0 |
| | | | | P | | | 100 | 99 | - | 94 | 102 | - | | | | | | | | |
| | | | | M | 80 | 10.0 | 24 | 83 | - | 56 | 167 | - | 5 | 5 | 5 | 5 | 5 | 5 | 5 | 0 |
| | | | | P | | | 109 | 97 | - | 91 | 102 | - | | | | | | | | |
| H | 3-Cl | $CH_3$ | 15/85 | M | 72 | 0.1 | 19 | 111 | - | 64 | 142 | - | 5 | 5 | 5 | 5 | 5 | 5 | 5 | 0 |
| | | | | P | | | 107 | 106 | - | 96 | 98 | - | | | | | | | | |
| | | | | M | 72 | 0.5 | 18 | 104 | - | 62 | 136 | - | 5 | 5 | 5 | 5 | 5 | 5 | 5 | 0 |
| | | | | P | | | 102 | 100 | - | 93 | 93 | - | | | | | | | | |
| | | | | M | 72 | 1.0 | 20 | 102 | - | 62 | 141 | - | 5 | 5 | 5 | 5 | 5 | 5 | 5 | 0 |
| | | | | P | | | 113 | 97 | - | 92 | 97 | - | | | | | | | | |

TABLE II (Continued)

| Compound | | | | Data | STG | Rate g/ha | # of FRT | YIELD FWT g | YIELD DWT g | HT cm | PLANT FWT g | PLANT DWT g | CHLORO | BRANCH | STIFF | S DIAM | L INOD | U INOD | TM FEM | PHYTOT |
|---|---|---|---|---|---|---|---|---|---|---|---|---|---|---|---|---|---|---|---|---|
| $A_1$ | $A_2$ | R | e/t | | | | | | | | | | | | | | | | | |
| H | 3-Cl | $CH_3$ | 15/85 | M | 84 | 5.0 | 30 | - | - | 57 | 171 | - | 5 | 5 | 5 | 5 | 5 | 5 | 5 | 0 |
| (Continued) | | | | P | | | 94 | - | - | 102 | 99 | - | | | | | | | | |
| | | | | M | 84 | 25.0 | 36 | - | - | 53 | 156 | - | 5 | 5 | 5 | 5 | 5 | 5 | 5 | 0 |
| | | | | P | | | 110 | - | - | 96 | 91 | - | | | | | | | | |
| | | | | M | 84 | 50.0 | 35 | - | - | 56 | 157 | - | 5 | 5 | 5 | 5 | 5 | 4 | 5 | 0 |
| | | | | P | | | 108 | - | - | 100 | 91 | - | | | | | | | | |
| 3-Cl | 4-F | $CH_3$ | 57/43 | M | 72 | 2.5 | 18 | 94 | - | 61 | 142 | - | 5 | 5 | 5 | 5 | 5 | 5 | 5 | 0 |
| | | | | P | | | 98 | 83 | - | 93 | 102 | - | | | | | | | | |
| | | | | M | 72 | 5.0 | 18 | 109 | - | 61 | 139 | - | 5 | 5 | 5 | 5 | 5 | 5 | 5 | 0 |
| | | | | P | | | 100 | 96 | - | 93 | 100 | - | | | | | | | | |
| | | | | M | 72 | 10.0 | 19 | 98 | - | 61 | 134 | - | 5 | 5 | 5 | 5 | 5 | 5 | 5 | 0 |
| | | | | P | | | 104 | 87 | - | 93 | 96 | - | | | | | | | | |

TABLE II (Continued)

| Compound A1 | A2 | R' | e/t | Data | STG | Rate g/ha | # of FRT | YIELD FWT g | YIELD DWT g | HT cm | PLANT FWT g | PLANT DWT g | CHLORO | BRANCH | STIFF | S DIAM | L INOD | U INOD | TM FEM | PHYTOT |
|---|---|---|---|---|---|---|---|---|---|---|---|---|---|---|---|---|---|---|---|---|
| 4-F | 3-F | H | 1/99 | M | 80 | 0.5 | 24 | 101 | - | 55 | 144 | - | 5 | 5 | 5 | 5 | 5 | 5 | 5 | 0 |
| | | | | P | | | 97 | 100 | - | 96 | 95 | - | | | | | | | | |
| | | | | M | 80 | 2.5 | 26 | 96 | - | 57 | 154 | - | 5 | 5 | 5 | 5 | 5 | 5 | 5 | 0 |
| | | | | P | | | 104 | 94 | - | 99 | 101 | - | | | | | | | | |
| | | | | M | 80 | 5.0 | 23 | 208 | - | 51 | 143 | - | 5 | 5 | 5 | 5 | 5 | 5 | 5 | 0 |
| | | | | P | | | 95 | 206 | - | 89 | 94 | - | | | | | | | | |
| $3-CF_3$ | 3-F | $CH_3$ | 65/35 | M | 75 | 0.5 | 16 | 50 | 15 | 59 | 146 | 48 | 5 | 5 | 5 | 5 | 5 | 5 | 5 | 0 |
| | | | | P | | | 104 | 100 | 105 | 92 | 101 | 108 | | | | | | | | |
| | | | | M | 75 | 2.5 | 17 | 66 | 20 | 66 | 178 | 55 | 5 | 5 | 5 | 5 | 5 | 5 | 5 | 0 |
| | | | | P | | | 113 | 133 | 135 | 102 | 122 | 124 | | | | | | | | |
| | | | | M | 75 | 10.0 | 18 | 58 | 17 | 63 | 173 | 53 | 5 | 5 | 5 | 5 | 5 | 5 | 5 | 0 |
| | | | | P | | | 120 | 116 | 119 | 97 | 119 | 121 | | | | | | | | |

TABLE II (Continued)

| Compound | | | | | | | | YIELD | | | PLANT | | | | | | | | | |
|---|---|---|---|---|---|---|---|---|---|---|---|---|---|---|---|---|---|---|---|---|
| $A_1$ | $A_2$ | R | e/t | Data | STG | Rate g/ha | # of FRT | FWT g | DWT g | HT cm | FWT g | DWT g | CHLORO | BRANCH | STIFF | SDIAM | LINOD | UINOD | TM FEM | PHYTOT |
| $3-CF_3$ (Continued) | 3-F | $CH_3$ | 65/35 | M | 80 | 5.0 | 25 | 94 | - | 59 | 159 | - | 5 | 5 | 5 | 5 | 5 | 5 | 5 | 0 |
| | | | | P | | | 116 | 94 | - | 99 | 105 | - | | | | | | | | |
| | | | | M | 80 | 10.0 | 24 | 72 | - | 53 | 138 | - | 5 | 5 | 5 | 5 | 5 | 5 | 5 | 0 |
| | | | | P | | | 113 | 72 | - | 89 | 90 | - | | | | | | | | |
| | | | | M | 80 | 20.0 | 15 | 39 | - | 51 | 125 | - | 5 | 6 | 5 | 5 | 5 | 4 | 5 | 0 |
| | | | | P | | | 69 | 39 | - | 87 | 82 | - | | | | | | | | |

EXAMPLE 3

Regulating the Growth and Enhancing the Yield of Soybean

Soybean (Glycine max variety Jacques 99) is planted in a greenhouse loamy sand soil mixture using 6 x 5 inch fiber pots (1 plant per pot) and is sprayed at the V3 stage (one expanded unifoliate, two expanded trifoliates) using the procedure described in Example 2. Five replications are used to obtain data. Soybean is harvested at the beginning seed stage (R5) or at the full seed stage when green seed fills the pod cavity at one of the four uppermost nodes on the main stem with a fully developed leaf of the check plant (R6). Data is recorded for all parameters as described in Example 2, including observations on the time of bloom (TM BLM) and leaf abcission (L ABSC), and is presented in Table III. The results indicate that selected cyanobutyrates used at the specified rates regulate the growth of soybeans and enhance the yield.

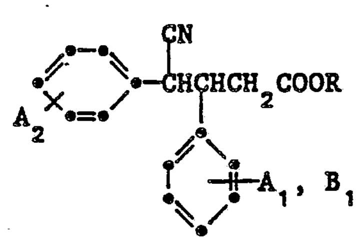

TABLE III

Enhancing the Yield of Soybean Using Selected Cyanobutyrates

| Compound $A_1$, $B_1$ | Compound $A_2$ | Compound R | Compound e/t | Data | STG | Rate g/ha | # of FRT | YIELD FWT g | YIELD DWT g | HT cm | PLANT FWT g | PLANT DWT g | CHLORO | BRANCH | STIFF | SDIAM | LINOD | UINOD | TMBLM | LABSC | PHYTOT |
|---|---|---|---|---|---|---|---|---|---|---|---|---|---|---|---|---|---|---|---|---|---|
| 4-F | 3-F | $CH_3$ | 1/99 | M | R6 | 1.0 | 57 | 54 | 15 | 61 | 51 | 11 | 5 | 5 | 5 | 5 | 5 | 5 | 5 | 5 | 0 |
| | | | | P | | | 121 | 131 | 133 | 108 | 140 | 136 | | | | | | | | | |
| | | | | M | R6 | 5.0 | 56 | 51 | 15 | 53 | 40 | 9 | 5 | 5 | 5 | 5 | 5 | 5 | 5 | 5 | 0 |
| | | | | P | | | 121 | 122 | 130 | 94 | 109 | 110 | | | | | | | | | |
| | | | | M | R6 | 10.0 | 49 | 48 | 15 | 54 | 39 | 9 | 5 | 5 | 5 | 5 | 5 | 5 | 5 | 5 | 0 |
| | | | | P | | | 106 | 116 | 126 | 95 | 107 | 110 | | | | | | | | | |
| H | 3-Cl | $CH_3$ | 15/85 | M | R6 | 62.5 | 58 | 61 | 18 | 54 | 40 | - | 5 | 5 | 5 | 5 | 5 | 5 | 5 | 5 | 0 |
| | | | | P | | | 143 | 134 | 135 | 113 | 112 | - | | | | | | | | | |
| | | | | M | R6 | 125.0 | 49 | 52 | 15 | 51 | 36 | - | 5 | 5 | 5 | 5 | 5 | 5 | 5 | 5 | 0 |
| | | | | P | | | 121 | 114 | 113 | 108 | 99 | - | | | | | | | | | |
| | | | | M | R6 | 250.0 | 51 | 51 | 14 | 58 | 42 | - | 5 | 5 | 5 | 5 | 5 | 5 | 5 | 5 | 0 |
| | | | | P | | | 126 | 112 | 103 | 122 | 117 | - | | | | | | | | | |

TABLE III (Continued)

| Compound $A_1, B_1$ | $A_2$ | R | e/t | Data | STG | Rate g/ha | # of FRT | YIELD FWT g | YIELD DWT g | HT cm | PLANT FWT g | PLANT DWT g | CHLORO | BRANCH | STIFF | DIAM | LINOD | UINOD | TMBLM | LABSC | PHYTOT |
|---|---|---|---|---|---|---|---|---|---|---|---|---|---|---|---|---|---|---|---|---|---|
| 3,5-diCl | H | $\underline{i}$-$C_4H_9$ | 57/43 | M | R5 | 100.0 | 59 | 39 | 9 | 45 | 39 | 8 | 5 | 6 | 5 | 5 | 5 | 5 | 5 | 5 | 0 |
| | | | | P | | | 131 | 133 | 137 | 111 | 129 | 131 | | | | | | | | | |
| | | | | M | R5 | 500.0 | 45 | 33 | 8 | 42 | 34 | 7 | 5 | 5 | 5 | 5 | 5 | 5 | 5 | 5 | 0 |
| | | | | P | | | 99 | 113 | 121 | 104 | 112 | 114 | | | | | | | | | |
| | | | | M | R5 | 1000.0 | 67 | 41 | 8 | 47 | 41 | 8 | 5 | 5 | 5 | 5 | 5 | 5 | 5 | 5 | 0 |
| | | | | P | | | 148 | 140 | 135 | 117 | 136 | 136 | | | | | | | | | |
| 3,5-diCl | H | $\underline{i}$-$C_3H_7$ | 60/40 | M | R5 | 100.0 | 44 | 31 | 7 | 40 | 30 | 7 | 5 | 5 | 5 | 5 | 5 | 5 | 5 | 5 | 0 |
| | | | | P | | | 108 | 126 | 111 | 105 | 108 | 109 | | | | | | | | | |
| | | | | M | R5 | 500.0 | 47 | 30 | 7 | 41 | 29 | 6 | 5 | 5 | 5 | 5 | 5 | 5 | 5 | 5 | 0 |
| | | | | P | | | 114 | 123 | 100 | 109 | 106 | 97 | | | | | | | | | |
| | | | | M | R5 | 2000.0 | 50 | 33 | 10 | 40 | 34 | 7 | 5 | 5 | 5 | 5 | 5 | 5 | 5 | 5 | 1 |
| | | | | P | | | 122 | 132 | 155 | 106 | 124 | 118 | | | | | | | | | |

TABLE III (Continued)

| Compound A1, B1 | A2 | R | e/t | Data | STG | Rate g/ha | # of FRT | YIELD FWT g | YIELD DWT g | HT cm | PLANT FWT g | PLANT DWT g | CHLORO | BRANCH | STIFF | S DIAM | L INOD | U INOD | TM BLM | L ABSC | PHYTOT |
|---|---|---|---|---|---|---|---|---|---|---|---|---|---|---|---|---|---|---|---|---|---|
| 3-Cl | 4-F | $CH_3$ | 57/43 | M | R6 | 2.0 | 37 | 38 | 12 | 49 | 29 | 7 | 5 | 5 | 5 | 5 | 5 | 5 | 5 | 5 | 0 |
| | | | | P | | | 95 | 102 | 106 | 108 | 96 | 98 | | | | | | | | | |
| | | | | M | R6 | 10.0 | 49 | 48 | 14 | 53 | 37 | 9 | 5 | 6 | 5 | 5 | 5 | 5 | - | 5 | 0 |
| | | | | P | | | 127 | 127 | 130 | 118 | 122 | 123 | | | | | | | | | |
| | | | | M | R6 | 50.0 | 47 | 44 | 13 | 51 | 31 | 8 | 5 | 5 | 5 | 5 | 5 | 5 | 5 | 5 | 0 |
| | | | | P | | | 122 | 117 | 121 | 112 | 103 | 108 | | | | | | | | | |

*Where only one substituent is specified for $A_1$, $B_1$, the other is hydrogen.

## EXAMPLE 4

### Regulating the Growth and Enhancing the Yield of Cotton

Cotton (*Gossypium hirsutum* variety Stoneville 825) is planted in a greenhouse loamy sand soil mixture using 6 x 5 inch fiber pots (1 plant per pot) and is sprayed at the R1 stage (when the first square appears at node 5 to 7) using the procedure described in Example 2. Five replications are sprayed at each rate. Cotton is harvested when at least the eighth or ninth reproductive internode of the check plants has elongated one-half inch or more (R8 or later). At this time cotton plants are usually flowering and contain three to five immature green bolls. Data is recorded for all parameters as described in Example 3 and is tabulated in Table IV. The results indicate that selected cyanobutyrates used at the specified rates regulate the growth of cotton and enhance the yield.

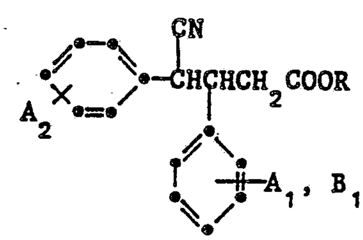

TABLE IV

Enhancing the Yield of Cotton Using Selected Cyanobutyrates

| Compound $A_1$, $B_1$ | $A_2$ | R | e/t | Data | STG | Rate g/ha | # of FRT | YIELD FWT g | YIELD DWT g | % of LVS or NDS | HT cm | PLANT FWT g | PLANT DWT g | CHLORO | BRANCH | STIFF | SDIAM | LINOD | UINOD | TMBLM | LABSC | PHYTOT |
|---|---|---|---|---|---|---|---|---|---|---|---|---|---|---|---|---|---|---|---|---|---|---|
| 3-Cl | H | $NH_2Me_2$ | 65/35 | M | RB | 100.0 | 25 | 44 | 7 | 16 | 126 | 198 | - | 5 | 5 | 5 | 5 | 5 | 5 | 5 | 5 | 0 |
| | | | | P | | | 141 | 206 | 209 | 110 | 106 | 110 | - | | | | | | | | | |
| | | | | M | RB | 500.0 | 20 | 26 | 5 | 15 | 123 | 179 | - | 5 | 5 | 5 | 5 | 5 | 5 | 5 | 5 | 0 |
| | | | | P | | | 115 | 123 | 131 | 103 | 103 | 100 | - | | | | | | | | | |
| | | | | M | RB | 1000.0 | 18 | 22 | 4 | 15 | 117 | 170 | - | 5 | 5 | 5 | 5 | 5 | 5 | 5 | 5 | 0 |
| | | | | P | | | 102 | 102 | 103 | 104 | 98 | 95 | - | | | | | | | | | |
| 3,5-diCl | H | $\underline{i}$-$C_3H_7$ | 60/40 | M | R8 | 100.0 | 11 | 14 | 3 | 12 | 64 | 75 | - | 5 | 5 | 5 | 5 | 5 | 5 | 5 | 5 | 0 |
| | | | | P | | | 106 | 130 | 139 | 97 | 100 | 101 | - | | | | | | | | | |
| | | | | M | R8 | 500.0 | 12 | 14 | 3 | 13 | 60 | 70 | - | 5 | 5 | 5 | 5 | 5 | 5 | 5 | 5 | 0 |
| | | | | P | | | 113 | 127 | 133 | 102 | 93 | 94 | - | | | | | | | | | |
| | | | | M | R8 | 2000.0 | 12 | 14 | 3 | 13 | 63 | 72 | - | 5 | 5 | 5 | 5 | 5 | 5 | 4 | 5 | 0 |
| | | | | P | | | 113 | 130 | 135 | 102 | 97 | 97 | - | | | | | | | | | |

TABLE IV (Continued)

| Compound $A_1$, $B_1$ | $A_2$ | R | e/t | Data | STG | Rate g/ha | # of FRT | YIELD FWT g | YIELD DWT g | % of LVS or NDS | HT cm | PLANT FWT g | PLANT DWT g | CHLORO | BRANCH | STIFF | S DIAM | L INOD | U INOD | TM BLM | L ABSC | PHYTOT |
|---|---|---|---|---|---|---|---|---|---|---|---|---|---|---|---|---|---|---|---|---|---|---|
| 3,5-diCl | H | $CH_2CH_2Cl$ | 60/40 | M | R9 | 100.0 | 12 | 19 | 4 | 12 | 68 | 86 | - | 5 | 5 | 5 | 5 | 5 | 5 | - | 5 | 0 |
| | | | | P | | | 104 | 111 | 109 | 95 | 98 | 98 | - | | | | | | | | | |
| | | | | M | R9 | 500.0 | 14 | 19 | 4 | 12 | 68 | 87 | - | 5 | 5 | 5 | 5 | 5 | 5 | 5 | 5 | 0 |
| | | | | P | | | 126 | 109 | 108 | 100 | 99 | 100 | - | | | | | | | | | |
| | | | | M | R9 | 2000.0 | 16 | 20 | 4 | 12 | 67 | 96 | - | 5 | 6 | 5 | 5 | 5 | 5 | 5 | 5 | 1 |
| | | | | P | | | 137 | 116 | 114 | 98 | 97 | 110 | - | | | | | | | | | |
| H | 3-F | $CH_3$ | 55/45 | M | RB | 50.0 | 20 | 28 | 5 | 16 | 122 | 170 | 38 | 5 | 5 | 5 | 5 | 5 | 5 | 5 | 5 | 0 |
| | | | | P | | | 134 | 119 | 115 | 111 | 108 | 129 | 126 | | | | | | | | | |
| | | | | M | RB | 250.0 | 16 | 17 | 3 | 15 | 114 | 139 | 29 | 5 | 5 | 5 | 5 | 5 | 5 | 5 | 5 | 0 |
| | | | | P | | | 112 | 71 | 65 | 104 | 101 | 105 | 94 | | | | | | | | | |
| | | | | M | RB | 500.0 | 14 | 15 | 3 | 15 | 106 | 126 | 26 | 5 | 5 | 5 | 5 | 5 | 5 | 5 | 5 | 0 |
| | | | | P | | | 97 | 63 | 60 | 103 | 94 | 95 | 85 | | | | | | | | | |

TABLE IV (Continued)

| Compound $A_1$, $B_1$ | $A_2$ | R | e/t | Data | STG | Rate g/ha | # of FRT | YIELD FWT g | YIELD DWT g | % of LVS or NDS | HT cm | PLANT FWT g | PLANT DWT g | CHLORO | BRANCH | STIFF | SDIAM | LINOD | UINOD | TMBLM | LABSC | PHYTOT |
|---|---|---|---|---|---|---|---|---|---|---|---|---|---|---|---|---|---|---|---|---|---|---|
| 4-F | 3-F | Na | 58/42 | M | R9 | 20.0 | 7 | 21 | 3 | 11 | 42 | 41 | 11 | 5 | 5 | 5 | 4 | 5 | 5 | 5 | 5 | 0 |
| | | | | P | | | 92 | 97 | 96 | 87 | 93 | 86 | 83 | | | | | | | | | |
| | | | | M | R9 | 100.0 | 8 | 32 | 5 | 12 | 50 | 59 | 16 | 5 | 5 | 5 | 5 | 5 | 5 | 5 | 5 | 0 |
| | | | | P | | | 105 | 144 | 142 | 98 | 111 | 122 | 122 | | | | | | | | | |
| | | | | M | R9 | 200.0 | 7 | 33 | 5 | 12 | 45 | 50 | 13 | 5 | 5 | 5 | 5 | 5 | 5 | 5 | 5 | 0 |
| | | | | P | | | 100 | 151 | 149 | 95 | 98 | 103 | 102 | | | | | | | | | |

*Where only one of $A_1$, $B_1$ is specified, the other is hydrogen.

EXAMPLE 5

Regulating Height and Branching in Apple

Apple (*Pyrus malus*) seedlings at the 2-3 leaf stage (~5 centimeters tall) are transplanted into a loamy sand greenhouse soil mixture using 4 inch by 4 inch plastic pots (one plant per pot). After growing for 8 weeks to an average height of 19 centimeters, the plants are treated with a solution of the test compound using the procedure described in Example 2. Data is recorded eleven weeks after treatment using four replicates at each rate. The results in Table V indicate that a selected cyanobutryate can be used at a specified rate to reduce the height and increase branching in apple.

TABLE V

Reduction in Height and Increase in Branching of Apples by Application of Methyl 3-p-Chlorophenyl-4-cyano-4-phenylbutyrate (e/t = 53/47)

| Data | STG | Rate (g/ha) | Height | No. of Branches | No. of Leaves | Plant Fresh Weight | Plant Dry Weight | Phytotoxicity |
|---|---|---|---|---|---|---|---|---|
| M | V | 0.0 | 60.3 | 0.0 | 37.3 | 31.5 | 12.0 | 0 |
| P | | (Check) | 100 | - | 100 | 100 | 100 | |
| M | V | 20 | 64.3 | 0.33 | 40.3 | 34.0 | 13.2 | 0 |
| P | | | 107 | - | 108 | 108 | 110 | |
| M | V | 40 | 45.3 | 0.33 | 31.3 | 20.6 | 7.6 | 0 |
| P | | | 75 | - | 84 | 65 | 63 | |
| M | V | 80 | 47.7 | 1.0 | 37.3 | 24.4 | 9.4 | 0 |
| P | | | 79 | - | 100 | 77 | 78 | |
| M | V | 160 | 30.7 | 1.0 | 26.7 | 12.8 | 4.7 | 3 |
| P | | | 51 | - | 71 | 41 | 39 | |

## EXAMPLE 6

### Regulating the Growth of Suckers on Tobacco by Application of 4-cyano-3,4-diphenylbutyric acid

Xanthia tobacco (Nicotianna tabacum L.) is planted into a loamy sand greenhouse soil mixture using six-inch plastic pots (one plant per pot) and is grown to the knee high (8-12 leaves) stage. An aqueous acetone solution containing a weighed amount of the experimental compound and 0.25 volume percent X-77® nonionic surfactant is sprayed until the leaves are drenched and runoff is collected at the axil where the suckers appear. The plants are watered and cared for in accordance with conventional greenhouse procedures until harvested 17 days after treatment. The results from four replicates summarized in Table VI below indicate that a selected cyanobutyrate can be used to inhibit the growth of tobacco suckers.

TABLE VI

Regulating the Growth of Tobacco Suckers Using 4-Cyano-3,4-diphenylbutyric acid

| Data | Rate (mg/plant) | No. of Suckers | Weight of Suckers |
|---|---|---|---|
| M | 0.0 | 2.0 | 20.3 |
| P | (Check) | 100 | 100 |
| M | 20 | 1.25 | 14.6 |
| P | | 62 | 72 |
| M | 30 | 2.25 | 1.0 |
| P | | 112 | 5 |
| M | 40 | 1.5 | 0.8 |
| P | | 75 | 4 |
| M | 40 | 0.5 | 0.6 |
| P | (PROWL®) | 25 | 3 |

30,439 WHAT IS CLAIMED IS:

1. A method for retarding growth and suppressing seedheads in turfgrasses characterized by applying to the foliage and stems of the plant or to the soil or the medium containing the seeds, propagating organs or said plants a plant growth regulating effective amount of the active threo stereoisomer alone or as a mixture with the other stereoisomers of compounds of the formula I

$$NC\text{-}\overset{R_3}{\overset{|}{C}}H\underset{R_2}{\underset{|}{C}}HCH_2COR_1$$

(I)

wherein $R_1$ is OH, $OR_4$ or OM;

$R_2$ and $R_3$ independently are each 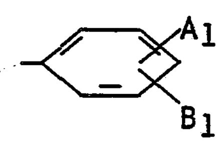 ,

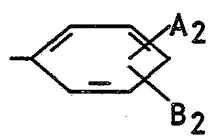 , pyridyl and halogen-substituted pyridyl;

$R_4$ is $C_1$-$C_8$ alkyl, $C_1$-$C_4$ monohaloalkyl, $C_3$-$C_4$ monohaloalkenyl, $C_4$-$C_6$ monohaloalkynyl, $C_4$-$C_6$ hydroxyalkynyl, $C_1$-$C_4$ alkoxy, $C_1$-$C_4$ alkyl, $C_3$-$C_4$ alkynyl, benzyloxy $C_2$-$C_3$ alkyl, benzyl or furfuryl;

M is an alkali metal, ammonium, $C_1$-$C_8$ mono- or dialkylammonium or hydroxyethylammonium; and

$A_1$, $A_2$ and $B_1$, $B_2$ independently are hydrogen, fluorine, chlorine, bromine, iodine, $NO_2$, CN, $C_1$-$C_4$ alkyl, $C_1$-$C_4$ alkoxy, $OCF_2R_5$,

$CF_3$, $N(CH_3)_2$, $COOCH_3$, OH, $S(O)_xCH_3$ and $S(O)_xCF_2R_5$ wherein x is 0, 1 or 2 and $R_5$ is H, F, $CHF_2$, CHFCl or $CF_3$.

2. A method according to claim 1 wherein the compounds are of formula II

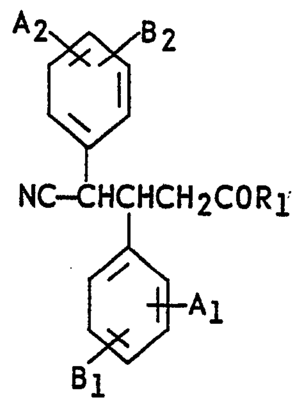

(II)

wherein $R_1$ is OH, $OR_4$ or OQ;

$A_1$, $B_1$, $A_2$ and $B_2$ at the <u>ortho</u> positions are independently hydrogen and fluorine;

$A_1$ and $B_1$ at the <u>meta</u> and <u>para</u> positions are independently hydrogen, fluorine, chlorine, bromine, iodine, $NO_2$, CN, $C_2$-$C_4$ alkyl, $C_1$-$C_4$ alkoxy, $OCF_2R_5$, $CF_3$, $N(CH_3)_2$, $COOCH_3$, OH, $S(O)_xCH_3$ and $S(O)_xCF_2R_5$ wherein x is 0, 1 or 2 and $R_5$ is H, F, CHFCl, $CHF_2$ or $CF_3$;

$A_2$ and $B_2$ at the <u>meta</u> and <u>para</u> positions are independently hydrogen, fluorine, chlorine and bromine;

$R_4$ is $C_1$-$C_4$ alkyl; and

Q is ammonium, $C_1$-$C_8$ mono- or dialkylammonium or hydroxyethylammonium.

3. A method according to claim 2 wherein said compound is *threo*- methyl 4-cyano-4-(*m*-fluorophenyl)-3-phenylbutyrate; or *threo*- 4-cyano-4-(*m*-fluorophenyl)-3-phenylbutyric acid.

4. A method according to claim 2 wherein said compound is the dimethylamine salt of *threo*-4-cyano-4-(*m*-fluorophenyl)-3-phenylbutyric acid; or the isopropylamine salt of *threo*-3-(*p*-chlorophenyl)-4-cyano-4-phenylbutyric acid.

5. A method according to claim 2 wherein said compound is *threo*- methyl 3-(*p*-chlorophenyl)-4-cyano-4-phenylbutyrate; or *threo*- 3-(*p*-chlorophenyl)-4-cyano-4-phenylbutyric acid.

6. A method according to claim 2 wherein said compound is *threo*- methyl 4-cyano-3,4-diphenylbutyrate; *threo*- methyl 4-cyano-3,4-bis(*m*-fluorophenyl)butyrate; *threo*- methyl 3-(*p*-chlorophenyl)-4-cyano-4(*m*-fluorophenyl)butyrate; *threo*- methyl 4-cyano-4-(3,4-difluorophenyl)-3-phenylbutyrate; *threo*- methyl 3-(*p*-chlorophenyl)-4-cyano-4-(3,4-difluorophenyl)butyrate; *threo*- methyl 4-cyano-4-(3,4-difluorophenyl)-3-(*m*-fluorophenyl)-butyrate; *threo*- methyl 4-(3-chloro-4-fluorophenyl)-4-cyano-3-phenylbutyrate; or *threo*- methyl 4-cyano-4-(3,5-difluorophenyl)-3-phenylbutyrate.

7. A method according to claim 1 wherein said compound is *threo*- methyl β-(*p*-chlorophenyl)-γ-cyano-6-fluoro-3-pyridinebutyrate; *threo*- methyl γ-cyano-3-fluoro-β-(*m*-fluorophenyl)-4-pyridinebutyrate; or *threo*- methyl β-(3,4-difluoro-α-cyanobenzyl)-4-fluoro-3-pyridinepropionate.

8. A method for regulating the growth of plants characterized by: applying to the foliage, roots, stems, seeds, seed pieces or propagating organs or to soil in which the plants are grown, an effective plant growth regulating amount of compounds of formula I

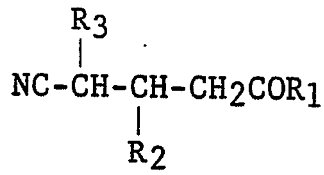

(I)

wherein $R_1$ is OH, $OR_4$ or OM;

$R_2$ and $R_3$ independently are each 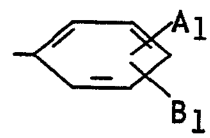 ,

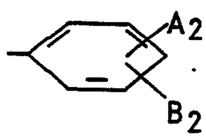 , pyridyl and halogen-substituted pyridyl;

$R_4$ is $C_1$-$C_8$ alkyl, $C_1$-$C_4$ monohaloalkyl, $C_3$-$C_4$ monohaloalkenyl, $C_4$-$C_6$ monohaloalkynyl, $C_4$-$C_6$ hydroxyalkynyl, $C_1$-$C_4$ alkoxy, $C_1$-$C_4$ alkyl, $C_3$-$C_4$ alkynyl, benzyloxy $C_2$-$C_3$ alkyl, benzyl or furfuryl;

M is an alkali metal, ammonium, $C_1$-$C_8$ mono- or dialkylammonium or hydroxyethylammonium; and

$A_1$, $A_2$ and $B_1$, $B_2$ independently are hydrogen, fluorine, chlorine, bromine, iodine, $NO_2$, CN, $C_1$-$C_4$ alkyl, $C_1$-$C_4$ alkoxy, $OCF_2R_5$, $CF_3$, $N(CH_3)_2$, $COOCH_3$, OH, $S(O)_xCH_3$ and $S(O)_xCF_2R_5$ wherein x is 0, 1 or 2 and $R_5$ is H, F, $CHF_2$, CHFCl or $CF_3$.

9. A method according to claim 8 wherein the compounds are of formula II

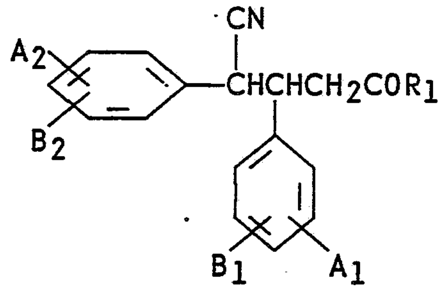

(II)

wherein $R_1$ is OH, $OR_4$ or OQ;

$A_1$, $B_1$, $A_2$ and $B_2$ at the <u>ortho</u> positions are independently hydrogen and fluorine;

$A_1$ and $B_1$ at the <u>meta</u> and <u>para</u> positions are independently hydrogen, fluorine, chlorine, bromine, iodine, $NO_2$, CN, $C_2$-$C_4$ alkyl, $C_1$-$C_4$ alkoxy, $OCF_2R_5$, $CF_3$, $N(CH_3)_2$, $COOCH_3$, OH, $S(O)_xCH_3$ and $S(O)_xCF_2R_5$ wherein x is 0, 1 or 2 and $R_5$ is H, F, CHFCl, $CHF_2$ or $CF_3$;

$A_2$ and $B_2$ at the <u>meta</u> and <u>para</u> positions are independently hydrogen, fluorine, chlorine and bromine;

$R_4$ is $C_1$-$C_4$ alkyl; and

Q is ammonium, $C_1$-$C_8$ mono- or dialkylammonium or hydroxyethylammonium.

10. A method according to claim 9 wherein $A_1$, $B_1$, $A_2$ and $B_2$ are each H, F, Cl, Br.

European Patent Office

# EUROPEAN SEARCH REPORT

Application Number

EP 87 11 6102

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 005 341 (AMERICAN CYANAMID) & US-A-4 224 052, US-A-4 313 754, US-A-4 383 848 (All Cat. D)<br>----- | 1-10 | A 01 N 37/34<br>A 01 N 37/38<br>A 01 N 37/44<br>A 01 N 37/48<br>A 01 N 47/02<br>A 01 N 43/40 |
| | | | **TECHNICAL FIELDS SEARCHED (Int. Cl.4)** |
| | | | A 01 N |

The present search report has been drawn up for all claims

| Place of search | Date of completion of the search | Examiner |
|---|---|---|
| THE HAGUE | 22-02-1988 | DECORTE D. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)